# EUROPEAN PATENT SPECIFICATION

(11) **EP 0 593 246 B1**
(45) Date of publication and mention of the grant of the patent: **13.08.1997**
(21) Application number: 93308096.2
(22) Date of filing: 12.10.1993
(51) Int. Cl.: B65G 49/00, B65G 37/02, B65G 47/88, B23Q 7/16

(54) **Conveyor with three plane locking system**
Förderer mit einem drei-Ebenen Blockiersystem
Convoyeur avec un système de blocage à trois plans

(30) Priority: 13.10.1992 US 959888
(43) Date of publication of application: 20.04.1994
(73) Proprietor: Weskamp, Robert, Buffalo Grove, Illinois 60089 (US)
(72) Inventor: Weskamp, Robert, Buffalo Grove, Illinois 60089 (US)
(74) Representative: Heath, Derek James

(56) References cited:
- DE-A- 4 010 697
- GB-A- 2 154 351
- US-A- 4 674 620

## Description

This invention relates generally to conveyor systems for use in automated assembly systems. More specifically, this invention relates to conveyor systems for use in both synchronous and asynchronous assembly systems. The combination of the improved carrier and the improved precision stop assembly of the present invention enables the carrier to be stopped, grasped and lifted slightly by the stop assembly to enable an assembly task to be performed on the workpiece mounted on the carrier while enabling the conveyor to proceed forwardly underneath the carrier. The operation of the conveyor is not disrupted by the performance of the assembly task.

### BACKGROUND OF THE INVENTION

Automated conveyor systems are well known. Automated conveyor systems presently used include synchronous assembly systems, asynchronous or non-synchronous assembly systems and machine tool loading systems.

In a synchronous assembly system, a workpiece proceeds through each stage of the assembly process and does not proceed to the next stage until the remaining workpieces are ready to proceed to the next stage (i.e. each workpiece is in synch with the other workpieces). In synchronous assembly systems, the stage or task that takes the greatest amount of time will limit the rate at which all other tasks or stages can be completed because the other workpieces on the conveyor do not proceed to the next stage until all workpieces, including the workpiece at the slowest stage, are ready to proceed to the next stage.

In asynchronous assembly systems, each assembly task is performed by physically removing the workpiece from the conveyor, performing the task and returning the workpiece to the conveyor where the workpiece is transported to the next stage. The conveyor in asynchronous assembly systems is always moving. However, workpieces are removed from the carrier so that slower tasks or stages do not necessarily slow down the optimum velocity of the conveyor.

In the assembly of any multiple component part, some tasks take longer than others. If one task takes longer than the remaining steps, the longer step will limit the rate of production. To alleviate this problem, many systems include divide sections whereby the longer task is performed in multiple to keep at least one part with the longer task completed moving the down the conveyor at all times.

In robotic systems, the preferred asynchronous assembly system includes a carrier for transporting the workpiece through the assembly system. When the carrier and workpiece reach an assembly point, a robotic arm or other mechanism lifts the carrier and workpiece above the conveyor system allowing the conveyor to proceed forward without the carrier and workpiece. If the task to be completed includes the application of a significant amount of force or pressure to the workpiece, it is often been necessary to have the robotic arm move the carrier and workpiece away from the conveyor. This movement requires time and additional hardware to accomplish. Thus, there is a need for a stop assembly, or work stop assembly, that will grasp the carrier, efficiently lift the carrier above the conveyor system and enable the assembly task to be performed to the workpiece directly above the conveyor system. Such a combination stop assembly and carrier system must provide support for the workpiece in all three planes, or the X, Y and Z planes.

In addition to robotic machines performing more assembly functions, there is a movement toward automatic testing or gauging of workpieces as they are assembled or machined. Typically, a workpiece may be tested after every two or three assembly tasks are performed. After a workpiece is been determined to be defective, it must be removed from the assembly line or re-routed to a re-testing station or a repair station. Physically removing the carrier and workpiece from the conveyor system can be costly and time consuming.

A better system would be to flag or otherwise mark the carrier in such a way so to indicate to stop assemblies downstream that the workpiece is defective and no task should be performed. Thus, there is a need for an improved combination carrier and stop assembly system that enables the carrier to be marked as one carrying a defective workpiece so that stop assemblies downstream from where the defect is detected do not waste time by performing additional assembly tasks (or processing or machining) on a defective workpiece. The "flagged" carrier may then be rerouted at the appropriate place downstream.

Another problem not addressed by the prior art is the 90° turning requirements of many assembly lines. Linked conveyors or transport systems that can turn at 90° angles are known. However, many carrier units that rest on top of the moving conveyor cannot turn at 90° angles with short radiuses without getting jammed in the side walls of the conveyor support structure. Often, special tracks or special conveyor systems must be designed specifically for the 90° turns thereby adding to the cost of the entire assembly system. Thus, there is a need for a narrow carrier unit that will ride on top of a linked conveyor and that will further proceed through a 90° turn with a short radius without undue interference with the side walls of the conveyor system.

### BRIEF DESCRIPTION OF THE INVENTION

The present invention makes a significant contribution to the art of automatic conveyor systems by providing an improved combination carrier and precision stop assembly for use in automatic conveyor systems. The combination includes two primary components: (1) an improved carrier; and (2) an improved stop assembly. The result is an conveyor system with higher transfer speeds and shorter index periods.

The invention starts from the conveyor system shown in DE-A-40 10 697 which describes a conveyor which serves to convey carriers for workpieces on which work is to be performed, there being positioning and carrier-stopping means to halt and position each carrier on the conveyor so that the necessary work can be carried out on its respective workpiece. There is also a carrier-stopping unit which stops a carrier arriving at the unit for the purpose of exactly positioning a following carrier at the positioning and carrier-stopping means. In addition, means are provided for engaging and lifting opposing sides of a carrier, and it is on this prior document that the preambles of the independent claims 1, 7, 12, 14 and 18-22 are based. The advantages of the present invention are gained by the characterising features of those independent claims, while preferred features of the invention are set forth in the subsidiary claims.

The carrier includes an upper surface for supporting a workpiece and a means for attaching the workpiece to the upper surface of the carrier. The under surface of the carrier rests on, and frictionally engages the moving conveyor. The front end of the carrier preferably includes a means for receiving an initial braking mechanism or stopping mechanism of the stop assembly. In the preferred embodiment, a slot is provided in the front end of the carrier to receive the initial braking mechanism of the stop assembly. The carrier may also be designed so that the front end of the carrier simply engages or bumps into the initial braking mechanism.

After the carrier arrives at the stop assembly and is stopped by the initial braking mechanism, the carrier must be raised above the moving conveyor belt. The stop assembly includes means for engaging the opposing sides of the carrier and means for lifting the carrier above the conveyor. The carrier includes complimentary means for engaging the opposing sides of the stop assembly so that the carrier may be grasped and lifted by the stop assembly. In the preferred embodiment, the stop assembly includes a rod and piston, or a first projection, that is ejected from one side of the stop assembly and engages a hole, or a means for receiving the first projection, disposed in one side of the carrier. The rod engages the hole and drives the carrier toward the opposing side of the stop assembly. A slot, or means for receiving a second projection of the stop assembly, is provided in the carrier on the side opposite to the side including the hole. A complimentary wedge, or second projection, is provided in the stop assembly on the side of the stop assembly opposite to the location of the rod and piston. Thus, when the rod engages the hole and drives the carrier unit to the opposing side of the stop assembly, the slot in the carrier is mateably engaged over the wedge of the stop assembly.

The above-mentioned rod and wedge of the stop assembly provide the means for grasping and lifting the carrier. The above-mentioned hole and slot of the carrier provide the means for engaging opposing sides of the stop assembly.

In the preferred embodiment, the rod and the hole are tapered to compliment one another. Specifically, a conical hole and conical rod is an effective combination. The system is designed so that the engagement of the tapered, or conical rod in the tapered, or conical hole and the complimentary engagement of the elongated slot and elongated wedge act to raise the carrier slightly, approximately 0.010" above the moving conveyor. This slight lift of the carrier above the conveyor enables the conveyor to proceed in a forwardly direction without interference from the under side of the now stopped carrier.

The preferred carrier includes at least two devices for activating sensors or proximity switches. A metal block or other detectable material is attached to one side toward the front end of the carrier for alerting a first sensor or proximity switch of the presence of the carrier at the stop assembly. A second sensor looks for the position of the reject pin mounted toward the rear end of the carrier. The reject pin includes at least two positions: a first position indicating that the workpiece is not defective; and a second position indicating that the workpiece is defective. The reject pin is preferably made of metallic substance or other substance that maybe easily detected by a sensor such as a proximity switch. The reject pin may take the form of a switch or other movable part with at least two positions, one position to indicate defects and another position to indicate no defects.

Alternatively, sensors disposed on opposing sides of the carrier will detect at least three positions of a reject pin: far left, far right and center, thereby providing a reject pin capable of sending three signals to the programmable controller.

The improved stop assembly in the present invention is a two-sided assembly disposed on both sides of the moving conveyor and may be mounted to the conveyor support. The stop assembly includes movable pistons and rods that are preferably driven by air pressure. A first movable piston and rod is the initial braking mechanism which extends outward and engages the front slot of the just-arriving carrier to stop it. At this point, the carrier is substantially stopped and the metal block on the carrier is detected by first sensor or proximity switch which alerts the programmable controller that the carrier has arrived at the stop assembly. The second sensor or proximity switch determines if the reject pin is in the position indicating that the workpiece is defective or in the position indicating that the workpiece is not defective.

If the second proximity switch, or sensor, detects that the reject pin is in the position indicating that the workpiece is not defective, then the programmable controller a second piston and rod which engages the hole on one side of the carrier. The rod engages the hole and drives the carrier to the opposing of the stop assembly thereby engaging the slot in the opposing side of the carrier over the wedge of the opposing side of the stop assembly and lifting the carrier above the moving conveyor as noted above.

In stop assemblies that perform quality tests and/or retests, a third and fourth piston and rod mechanisms are required. Specifically, if the stop assembly performs a quality test and workpieces determine to be defective, a piston and rod is required to drive the reject pin to the position indicating that the part is defective. Similarly, if the stop assembly is performing a re-test after a repair or simple re-test and the workpiece is determined to be not defective or no longer defective, another piston and rod may be required to drive the reject pin from the position indicating defect to the position indicating no defect.

Thus, communication linkages are required between the programmable controller and the first sensor indicating the presence of the carrier, the second sensor indicating the position of the reject pin, the means for activating the initial braking mechanism, the means for activating the tapered or conical rod (first projection), the means for activating the reset piston/rod for resetting the reject pin position and the means for activating the reject piston/rod for activating the piston and rod that moves the reject pin from the non-defective to the defective position.

Also included in the preferred embodiment of the carrier is an additional rear slot that enables the initial braking system to be activated before the carrier has completely departed from the stop assembly. The rear slot is disposed on the side of the carrier adjacent to the initial braking mechanism and extends rearward through the rear of the carrier. Because the rear slot is open ended at the rear end of the carrier, the initial braking mechanism may activated before the carrier has fully departed from the stop assembly and the initial braking mechanism will be accommodated in the rear slot but will not engage the carrier and will not stop the carrier from proceeding forward to the next stop assembly.

The combination carrier and precision stop assembly lends itself to an improved method of performing an assembly task. A carrier resting on a moving conveyor arrives at a stop assembly. The carrier is stopped by initial braking mechanism and the presence of the carrier is thereafter detected by a first sensor. A signal from a second sensor initially detects whether the carrier is transporting a defective or non-defective workpiece. If the workpieces is non-defective, the stop assembly engages opposing sides of the carrier and lifts it above the conveyor. The programmable controller instructs the means for activating the piston and rod (first projection) to engage the hole (means for engaging the first projection) in the carrier which drives the carrier to the opposing side of the stop assembly where a slot (means for engaging the second projection) in the carrier positively engages the wedge (second projection) disposed on the opposing side of the stop assembly. This action raises the carrier above the moving conveyor enabling the conveyor to proceed forward without interference. At this point, the assembly task is performed on the non-defective workpiece.

If the workpiece is defective, the rod does not engage the hole. Rather, the initial braking system is immediately released and the carrier, carrying the defective workpiece, proceeds to the next stop assembly which will either let the defective workpiece go through untouched, will reroute it, or conduct a repair task.

In the preferred embodiment of the carrier, an arcuate relief or undercut is provided on the lower portion of each side. The undercut enables the carrier to proceed through a 90° or other sharp turn with a small radius. Specifically, the undercut accommodates the inner guide roller of the turn. This is an important development because the turning portion of the conveyor system is normally wasted conveyor space. It is difficult and expensive to construct the stop assembly unit on a turn or a portion of the conveyor that is not straight. Therefore, 90° turns are preferably made as quickly, or with a small a radius as possible. Thus, a carrier that can proceed unhindered through a 90° turn with a small radius is an important development.

Another aspect of the shape of the carrier worth noting is the curvature of the front and rear ends of the carrier in combination with the curved undercuts provided in both sides of the carrier. The curvature of each end of the carrier enables a string of carriers lined up end-to-end to proceed around a sharp turn without interfering with the track support or otherwise hanging up in the middle of the turn. Carriers with straight sides and with squared-off ends cannot proceed around sharp turns and cannot proceed around turns lined up in an end-to-end fashion.

It is therefore an object of the present invention to provide a carrier unit with an improved means for receiving an initial braking mechanism.

Another object of the present invention is to provide a carrier unit that can be easily grasped and lifted above a moving conveyor.

Yet another object of the present invention is to provide a carrier unit with an improved method of flagging defective parts and enabling the flag mechanism to be reset automatically.

Another object of the present invention is to provide a carrier unit that is easily detected when it arrives at a stop assembly.

Another object of the present invention is to provide a carrier unit configured to pass through sharp turns in an assembly line and further to pass through sharp turns in an assembly line without interfering with the carrier unit abutting the front or rear end of the carrier unit.

Another object of the present invention is to provide a stop assembly with an improved method of grasping and raising a carrier and workpiece above the moving conveyor and thereafter providing support for the carrier and workpiece in the X, Y and Z planes.

Yet another object of the present invention is to provide a stop assembly with an improved system for detecting and flagging defective workpieces.

Yet another object of the present invention is to provide an improved stop assembly for retesting and/or repairing defective workpieces and resetting the flag mechanism indicating that the workpiece is defective.

It is still another object of the present invention to provide an improved carrier unit that may proceed through a 90° turn with a small radius.

### BRIEF DESCRIPTION OF THE DRAWINGS

This invention is illustrated more or less diagrammatically in the accompanying drawings, wherein:
Figure 1 is a top plan view of a carrier in a stop assembly and a carrier leaving the same stop assembly, both the carriers and stop assembly being made in accordance with the preferred embodiments of the present invention;
Figure 2 is a right-side view of the stop assembly and carriers shown in Figure 1;
Figure 3 is a left-side view of the stop assembly and carriers shown in Figure 1;
Figure 4 is a sectional view taken substantially along line 4-4 of Figure 1 particularly illustrating the initial braking mechanism;
Figure 5 is a sectional view taken substantially along line 5-5 of Figure 1;
Figure 6 is a sectional view taken substantially along line 5-5 of Figure 1 particularly illustrating the carrier as it is grasped and lifted above the carrier by the stop assembly;
Figure 7 is a sectional view taken substantially along line 7-7 of Figure 1;
Figure 8 is a top view of a carrier shown in Figure 1;
Figure 9 is rear-end view of a carrier shown in Figure 1;
Figure 10 is a right-side view of a carrier shown in Figure 1;
Figure 11 is a left-side view of a carrier shown in Figure 1;
Figure 12 is a top view of the wedge of the stop assembly shown in Figure 1;
Figure 13 is a right-side view of the wedge shown in Figure 12;
Figure 14 is a front-end view of the wedge shown in Figure 12;
Figure 15 is a rear-end view of the wedge shown in Figure 12;
Figure 16 is a top plan view of a 90° turn particularly illustrating the movement of two carriers made in accordance with the present invention proceeding through the turn; and
Figure 17 is an end view of the 90° turn and a carrier shown in Figure 16.

### DETAILED DESCRIPTION OF THE INVENTION

Like reference numerals will be used to referred to like or similar parts from Figure to Figure in the following description of the drawings.

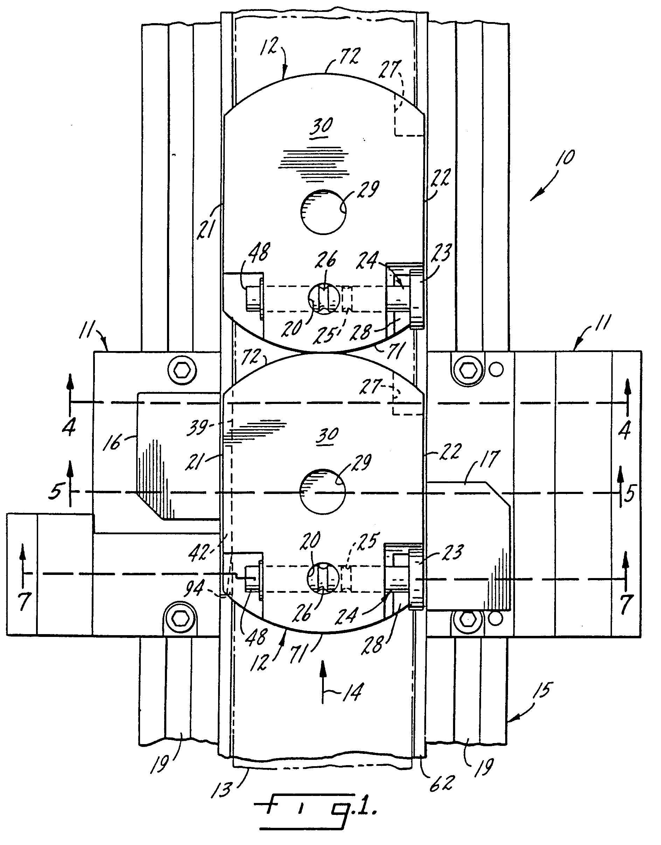

Referring first to Figure 1, a combination carrier/stop assembly 10 is shown including the stop assembly 11 and two carriers 12, one having just entered the stop assembly 11 and the other just departing the stop assembly 11. The direction of travel of both the carriers 12 and the conveyor, indicated generally at 13, is indicated by the direction arrow 14. The conveyor 13 is disposed within a track support, indicated generally at 15.

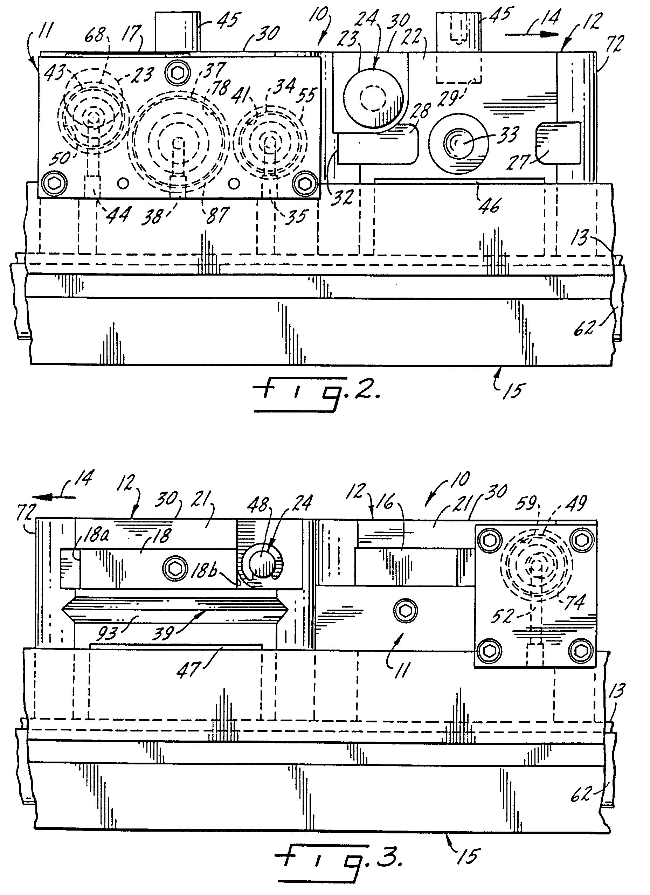

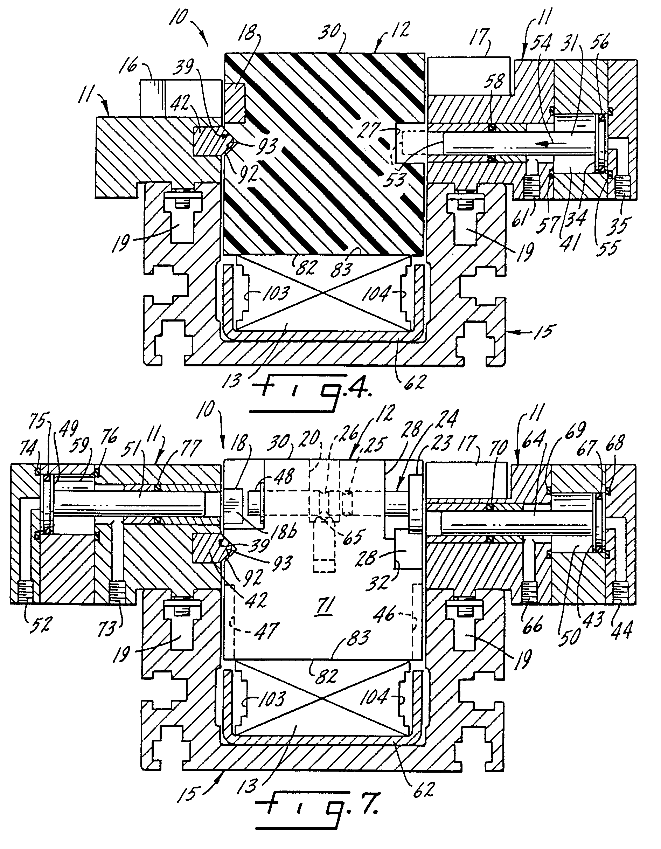

The stop assembly 11 is disposed on either side of the conveyor 13. Figure 1 also illustrates the two sensors 16, 17. Sensor 16 (or proximity switch 16) senses the arrival of the carrier 12 at the stop assembly by sensing the presence of a metal block 18 (see Figure 3) on the left side 21 of the carrier 12 (the right side of the carrier 12 being designated as 22). The stop assembly 11 includes a means for communicating the signal of the sensor 16 from the sensor 16 to the programmable controller (not shown). Upon receiving the indication that the carrier 12 has arrived at the stop assembly 11, the programmable controller reads the incoming signal from the sensor 17.

The sensor 17 indicates the position of the head 23 of the reject pin, indicated generally at 24. When the head 23 of the reject pin 24 is disposed toward the right side 22 of the carrier 12, the workpiece (not shown) is indicated to be non-defective, or the workpiece has passed the last quality check. If the head 23 of the reject pin 24 is disposed inward so that the groove 25 is disposed under the hole 20 where groove 26 is shown in Figure 1, then the workpiece is indicated to be defective and the prescribed task to be performed at the stop assembly 11 is not carried out. In the embodiment shown in the Figures and described herein, if the sensor 17 detects the presence of the head 23 of the reject pin 24, the workpiece is deemed non-defective. If the sensor 17 cannot detect the presence of the head 23 because it is disposed to the left of the sensor 17, then the part is deemed defective. Of course, an opposite configuration could be employed and still fall within the scope of the invention.

As seen in Figure 1, the head 23 of the reject pin 24 is disposed toward the right near the sensor 17 (or proximity switch 17) and the sensor 17 sends a signal to the programmable controller that the workpiece is not defective and the prescribed assembly task will be carried out.

The hole 29 disposed toward the center of the carrier 12 is intended to provide a means for affixing the workpiece (not shown) to upper surface 30 of the carrier 12. Of course, other suitable means for affixing a workpiece to the carrier 12 are available.

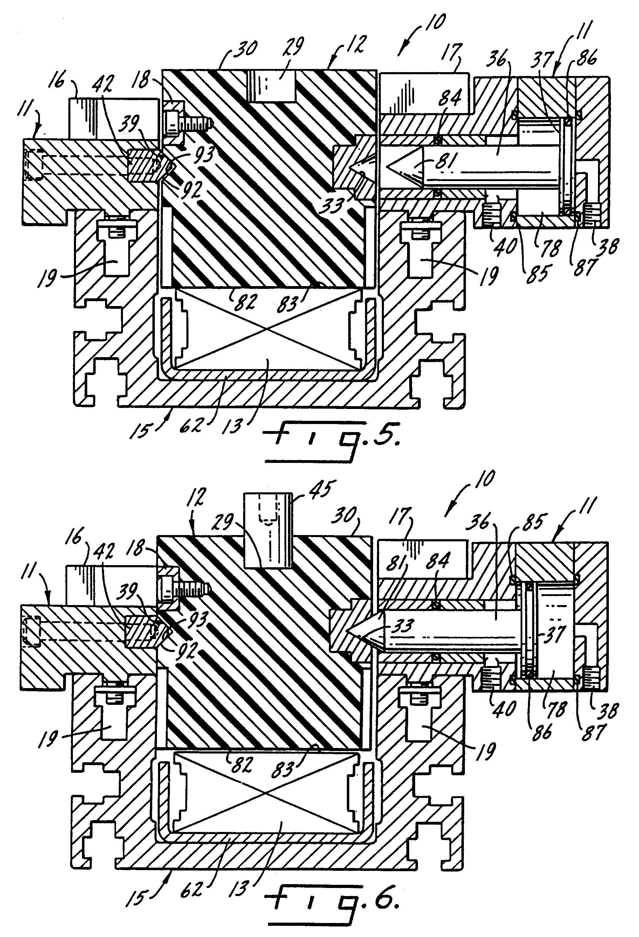

Turning to Figure 2, a right side view of the stop assembly 11 and a carrier 12 is shown. Referring first to the carrier 12 shown to the right of the stop assembly 11, the front slot 27 and rear slot 28 are illustrated. The front slot 27 is intended to receive or provide a means for receiving an initial braking mechanism or initial braking rod 31 (see Figure 4) of the stop assembly 11. Essentially, the front slot 27 is the area of first contact between the carrier 12 and the stop assembly 11.

The rear slot 28 is also intended to accommodate the initial braking rod 31 (see Figure 4) in the event the initial braking rod 31 extends outward prematurely as the carrier 12 leaves the stop assembly 11 or if the system is simply timed so that the initial braking rod 31 is intended to extend outward before the carrier 12 has completely departed from the stop assembly 11. The rod 31 can extend into the slot 28 and the carrier can still pass forward (to the right) without interference because the rear end 32 of the rear slot 28 is open and allows the rod 31 to pass through.

Referring to Figure 4, the means for activating the initial braking rod 31 includes a piston 34 and rod 31 disposed within a cylinder 41, and a supply of pressurized air (not shown), communication between the air supply and clinger 41 is provided by the port 35. The air supply is controlled by the programmable controller (not shown).

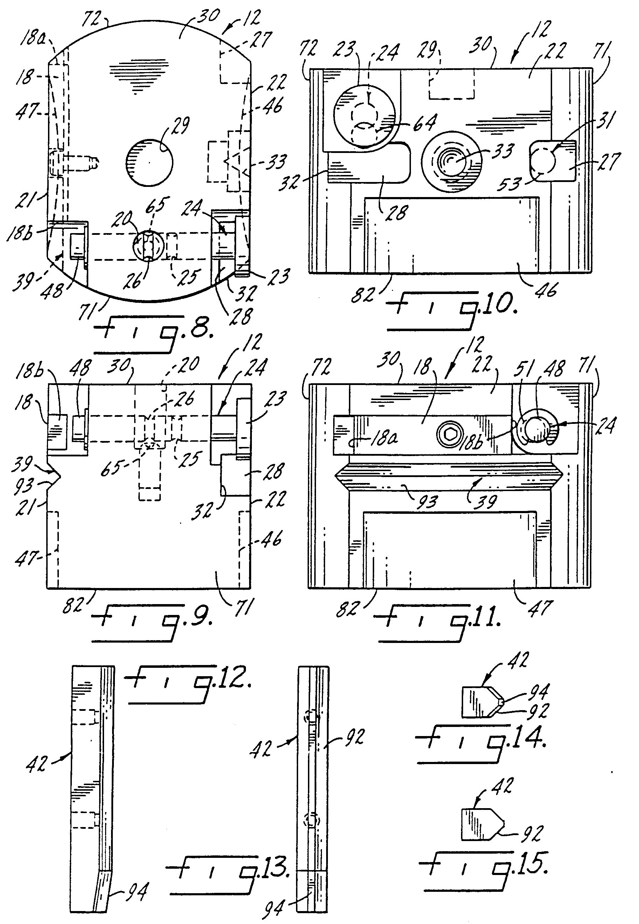

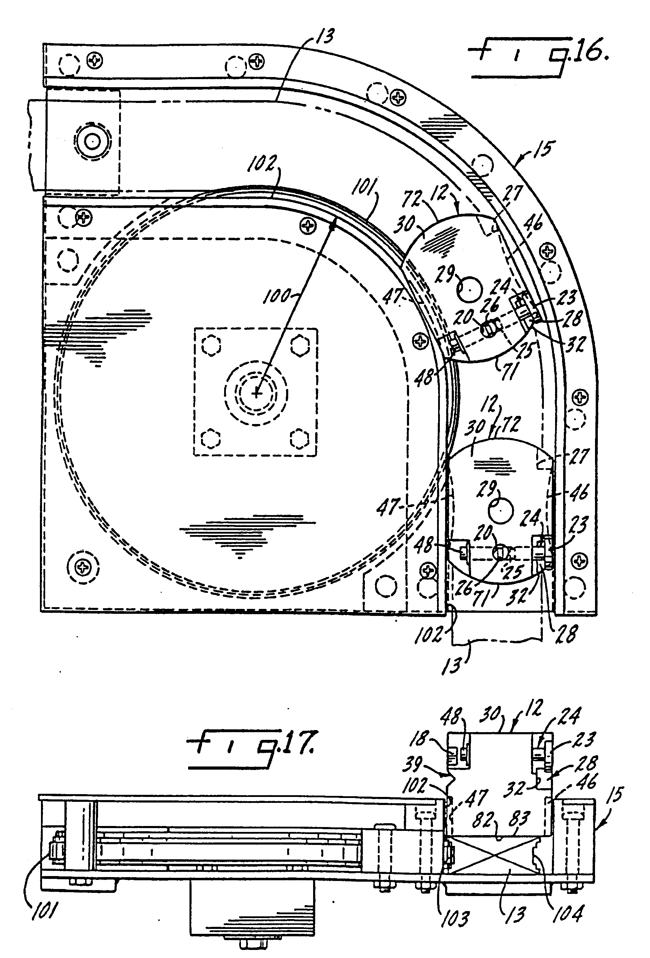

Returning to Figure 2, the hole 33 disposed toward the center of the right side 22 of the carrier 12 accommodates a rod 36 (not shown in Figure 2; see Figures 5 and 6). Turning now to Figures 5 and 6, the rod 36 and piston 37 are moved inward and outward via air or fluid pressure in the cylinder 78. Communication between the cylinder 78 and a pressurized air supply (not shown) is established through the port 38. As noted below, when the rod 36 engages the hole 33, the carrier 12 is moved toward the left (according to the orientation of Figure 1) and the slot 39 (see Figure 3) engages a wedge 42 (see Figure 7) which results in the lifting of the carrier 12 (see Figure 6).

Referring to Figures 2 and 7, the reject piston 43 and rod 64 move the reject pin 24 toward to the position indicating that the workpiece 45 is defective. Communication is established between the cylinder 50 and the pressurized air supply (not shown) by the port 44.

Also seen in Figure 2 is a view of the head 23 of the reject pin 24. The head 23 being disposed along the right side 22 of the carrier 12 thereby enabling it to be sensed by the sensor 17 (see Figure 1). Also shown in Figure 2 is a side view of the undercut 46 disposed on the right side 22 of the carrier 12 (see also Figure 8). A like undercut 47 is disposed on the left side 21 of the carrier 12 as seen in Figure 8.

Turning to Figure 3, a left side view of the stop assembly 11 and carrier 12 is shown. As discussed above, the presence of the carrier 12 and the stop assembly 11 is sensed by a sensor 16 (see Figure 1) which detects the presence of the metal block 18 disposed on the left side 21 of the carrier 12. Also disposed on the left side 21 of the carrier 12 is the distal end 48 of the reject pin 24. As noted above, if the particular stop assembly 11 shown were a testing and/or repair station, it is foreseeable that a defect in the workpiece 45 could be corrected and/or repaired. In this event, the reject pin 24 would to be reset to the position indicating that the workpiece 45 is not defective. To accomplish this end, a piston 49 and rod 51 (see Figure 7) are provided to drive the distal end 48 of the reject pin 24 back to the position indicating that the workpiece 45 is not defective (see also Figure 7). Also to be noted on the left side 21 of the carrier 12 is the elongated slot 39 which engages the wedge 42 (see Figure 4) when the carrier 12 is grasped and lifted by the stop assembly 11. As noted above, the undercut 47 is to facilitate the maneuvering of the carrier 12 around a 90° turn. The port 52 provides fluid communication between the piston 49 and the pressurized air supply (not shown).

The metal block 18 may be a strip of metal as opposed to a block of metal if the sole function of the block 18 is to be detected by the sensor 16. However, in the preferred embodiment, the block 18 also acts to engage a comb-like structure with teeth (not shown) that engage each end 18a, 18b of the block 18. The comb-like structure engages a group of carriers 12 by the blocks 18 and shuttles the carriers 12 forward together to a succeeding station.

The sectional view provided in Figure 4 illustrates the action of the wedge 42 in the slot 39 and the action of the initial braking rod 31 in the front slot 27. Also to be noted from Figure 4 is the proximity of the metal block 18 to the first sensor 16 as the carrier 12 enters the stop assembly 11. The track support 15 includes mounting slots 19 for attaching the stop assembly 11 to the track support 15.

As noted above, shortly after carrier 12 leaves the stop assembly 11, or during the departure of a carrier 12 from a stop assembly 11, the means for activating the initial braking mechanism 31 or the rod 31 is activated. The distal end 53 of rod 31 also initially engages the slot 27 as a carrier 12 enters the stop assembly 11. The means for activating the rod 31 and piston 34 is pressurized air that is supplied through the port 35 to the cylinder 41 to drive the piston 34 and rod 31 in the direction of the arrow 54 to the position shown in phantom in Figure 4. Quad-rings indicated at 55, 56, 57 and 58 provide a seal and prevent escape of air pressure. The initial braking rod 31 is released or moved to the right upon the application of pressurized air through the port 61 thereby driving the piston 34 to the right and into the retracted position shown in solid in Figure 4.

As noted above, the sensor 16 is in position to detect the proximity of the metal block 18. And as shown in Figure 7, the sensor 17 is in position to detect the proximity of the head 23 of the reject pin 24. The track support extrusion 15 supports a liner 62 which in turn supports a standard conveyor indicated generally at 13. The conveyor 13 employed in the preferred embodiment is sold under the name "Rex 1700" and is claimed in U.S. Patent No. 4,436,200.

Figure 7 illustrates the operation of the flag rod 64 and piston 43 and the reset rod 51 and piston 49. Air is supplied to the cylinder 50 through the port 44 which in turn drives the piston 43 and the rod 64 to the left to engage the head 23 of the reject pin 24. This action would move the slot 26 off the ball detent 65 and move the slot 25 over on top of the ball detent 65. This position would indicate that the workpiece 45 (see Figure 2) is defective and that any prescribed task should not be performed on the workpiece 45. The rod 64 is withdrawn upon the application of pressurized air through the port 66 and through the cylinder 50 thereby driving the piston 43 back to the position shown in Figure 7. Quad-rings 67, 68, 69 and 70 prevent air leakage and help ensure effective operation of the piston 43.

Turning to the reset piston 49 also shown in Figure 7, pressurized air is supplied through the port 52 which drives the rod 51 to the right to reset the reject pin 24 from the position indicating that the workpiece 45 is defective to the position indicating that the workpiece 45 is not defective. The rod 51 is withdrawn upon the application of pressurized air through the port 73 which drives the piston 49 to the left. Quad-rings 74, 75, 76 and 77 prevent air leakage.

Returning to Figures 5 and 6, the grasping and lifting of the carrier 12 by the stop assembly 11 is illustrated. After the carrier 12 has arrived at the stop assembly 11 and the presence is indicated by detection of the metal block 18 by the sensor 16, the programmable controller verifies that the workpiece 45 is not defective by reading the signal from the sensor 17. Upon confirmation that the workpiece 45 is not defective (as indicated by the position of the reject pin 24 in Figures 1 and 7), a signal is sent to the means for activating the piston 37 and rod 36. Pressurized air is supplied through the port 38 to the cylinder 78 which drives the piston 37 and tapered rod 36 to the left as seen in Figure 6. The engagement of the distal end 81 of the rod 36 in the tapered hole 33 drives the carrier 12 to the left as shown in Figure 6. This action causes the slot 39 to fully engage the wedge 42 thereby lifting the carrier 12 above the conveyor 13. This action will be noted by the slight gap between the underside 82 of the carrier 12 and the upper surface 83 of the conveyor link 13 shown in Figure 6. Quad-rings 84, 85, 86 and 87 prevent air leakage and provide effective operation of the piston 37. Pressurized air is supplied through the port 40 to retract the rod 36 and piston 37.

The sequence of operation of the carrier 12 through the stop assembly 11 is illustrated by viewing Figures 4 through 7. In Figure 4, the carrier 12 has just arrived at the stop assembly 11 and the front slot 27 has been engaged by the distal end 53 of the initial braking rod 31 as shown in phantom. The under surface 82 of the carrier 12 is still resting on the upper surface 83 of the conveyor. The slot 39 is not positively engaged by the wedge 42 but a gap between the lower angled surface 92 of the wedge 42 and the lower angled surface 93 of the slot 39 is evident. The presence of the carrier 12 has been detected by the sensor 16 and the information has been sent to the programmable controller which has now received the signal from the sensor 17 indicating that the workpiece is not defective. A signal is sent from the programmable controller to the means for activating the piston 37 and rod 36 to provide pressurized air through the port 38 to the cylinder 78 to drive the piston 37 and consequently the tapered rod 36 into the tapered hole 33 (see Figure 5). As seen in Figure 6, the rod 36 engages the hole 33 and drives the carrier 12 to the left side of the stop assembly 11. This action causes the slot 39 to positively engage the wedge 42 thereby creating the gap between the under surface 82 of the carrier 12 and the upper surface 83 of the conveyor link 13 (see Figure 6). The carrier 12, as shown in Figure 6, is in the position whereby the conveyor 13 is free to move underneath the carrier 12 without interference and an assembly task may be performed on the workpiece 45. Rods 36 and 31 are subsequently retracted to lower the carrier 12 and allow it to depart from the stop assembly 11.

Figures 8 through 11 illustrate physical details of the preferred embodiment of the carrier 12. Of course, alternative embodiments will be readily ascertainable by those skilled in the art without departing from the scope of the present invention. Turning to Figure 8, a top view of the carrier 12 illustrates the undercuts 46, 47 for turning around right and left turns respectively. The front end 72 and the rear end 71 are curved to enable of group of carriers 12 to proceed through a sharp turn with jamming. If the ends 72, 71 are not curved and instead are square, the ends 72, 71 of each carrier 12 would engage one another thereby causing the carriers 12 to jam in the turn. The hole 29 provides a means for mounting the workpiece 45 but it will be understood that other mounting means are readily available. The reject pin 24 is in the position indicating that the workpiece is not defective. Figure 8 also illustrates the open end 32 of the rear slot 28 which enables the initial braking rod 31 to be activated before the carrier 12 completely departs from the stop assembly 11.

Figure 9 illustrated the two positions of the reject pin 24. As previously discussed in reference to Figure 1, when the groove 26 is disposed on top of the ball detent 65, the workpiece 45 is deemed not defective. When the groove 25 is disposed over the ball detent 65, the workpiece 45 is deemed defective because the second sensor 17 does not detect the presence of the head 23 of the reject pin 24 (see Figure 1). Of course, the defective and non-defective positions could be reversed and the flag mechanism could be embodied in a switch (or other multiple position part) other than the reject piston 24 without departing from the scope of the present invention. As noted above, more than two signals (defective/non-defective) may be obtained from the disclosed reject pin 24 concept. For example, two sensors disposed on opposing sides of the carrier could detect three positions of the reject pin (far left, far right and middle).

Figure 10 and 11 illustrate the tapered hole 33/elongated slot 39 combination of the preferred embodiment. It will be noted that any combination that provides support for the carrier 12 in the X, Y and Z planes would be suitable for the purposes of the present invention. Figures 10 and 11 also include phantom views of the rods 64, 36 and 31 of the stop assembly 11.

Figure 12 is an illustration of the wedge 42 disposed on the left side of the stop assembly 11. The front end 94 is tapered to the left thereby providing an easier opening to accommodate a carrier 12.

Figures 16 and 17 illustrate the ability of the carrier 12 of the present invention to make a 90° turn with a short radius 100. The conveyor track 13 is a standard conveyor consisting of relatively small links pivotally connected together that enable the conveyor to turn around sharp corners as the one indicated in Figure 16. A guide roller 101 guides the conveyor around the turn. The guide roller 101 does not provide a driving mechanism for the carriers 12 in addition to the driving mechanism for the conveyor 13. The arcuate undercut 47 enables the carrier 12 to turn about the inner edge 102 of the track support 15. To accommodate the sharp turn illustrated in Figure 16, a standard conveyor linkage 13 is utilized with indentations indicated at 103 and 104 to accommodate the guide roller 101. Thus, while it has been possible before to provide a conveyor 13 that could turn 90° at a radius 100, the present invention provides a carrier 12 that can make a sharp turn without undue modification of the carrier 12 or the track support 15.

Thus, the present invention provides an improved carrier for transporting workpieces between stop assembly stations. The carrier provides an improved method for flagging defective workpieces and an improved method of resetting the defect flag. The stop assembly of the present invention provides an improved method for sensing the presence of the carrier, the defective/non-defective status of the workpiece and for grasping and lifting the carrier just above the moving conveyor to allow the conveyor to continue forward as a prescribed assembly task, test or repair is conducted on the workpiece. The configuration of the carrier also enables it to turn sharp corners without interfering with a standard track support.

Although only one preferred embodiment of the present invention has been illustrated and described, it will at once be apparent to those skilled in the art that variations may be made within the spirit and scope of the invention. Accordingly, it is intended that the scope of the invention be limited solely by the scope of the hereafter appended claims and not by any specific wording in the foregoing description.

## Claims

1. A combination carrier and precision stop assembly (10, 11) for use in a conveyor system, the combination comprising a carrier (12), a stop assembly (11), and means for engaging and lifting opposing sides of the carrier (12), the carrier having an upper surface (30) for supporting a workpiece, an under surface for frictionally engaging a moving conveyor (13), and means for engaging one side of the stop assembly, there also being means for engaging a second opposing side of the stop assembly, whereby the carrier (12) is raised vertically upon engagement of the two opposing sides of the stop assembly (11) so as to allow the conveyor (13) to move forwards underneath the carrier without frictionally engaging the under surface of the carrier; and characterised in that the stop assembly (11) includes an initial braking mechanism (31) and means for activating the initial braking system to initially stop the carrier upon arrival at the stop assembly.

2. The combination of claim 1, wherein the carrier (12) also includes means for receiving the initial braking mechanism (31) to initially stop the carrier upon arrival at the stop assembly.

3. The combination of claim 1 or claim 2, wherein the stop assembly (11) includes a first sensor (16) for detecting the presence of the carrier (12) after the carrier is initially stopped by the initial braking mechanism (31), the stop assembly also including means for communicating the presence of the carrier (12) to a programmable controller upon arrival of the carrier (12) at the stop assembly.

4. The combination of any one of claims 1-3, wherein the carrier (12) also includes a reject pin (24) disposed in the carrier (12) and having at least two positions, one position indicating that the workpiece is defective, and another position indicating the workpiece is not defective.

5. The combination of claim 4, wherein the stop assembly (11) includes a second sensor (17) for detecting the position of the reject pin (24) as well as means for communicating the position of the reject pin (24) to a programmable controller, the programmable controller activating the means for engaging and lifting opposing sides of the carrier only when the reject pin is in the position indicating the workpiece is not defective.

6. The combination of claim 4 or claim 5, wherein the stop assembly (11) includes a reset piston (34) and means for activating the reset piston, and wherein a programmable controller activates the means for activating the reset piston, the reset piston thereafter engaging the reject pin (24) and moving the reject pin from the position indicating that the workpiece is defective to the position indicating the workpiece is not defective.

7. A carrier (12) for use in a conveyor system wherein means are provided for engaging and lifting opposing sides of the carrier, the carrier (12) having an upper surface (30) for supporting a workpiece and an under surface for frictionally engaging a moving conveyor (13), there also being means for engaging one side of a stop assembly (11) and means for engaging a second opposing side of the stop assembly, characterised in that a reject pin (24) is disposed in the carrier (12), the reject pin having two positions, one position indicating that the workpiece is defective, and another position indicating the workpiece is not defective.

8. The carrier of claim 7, including means for receiving an initial braking mechanism (31) to initially stop the carrier (12) upon arrival at the stop assembly (11).

9. The carrier of claim 7 or claim 8, wherein the carrier (12) has a front end, a rear end, a middle portion and two sides, and wherein at least one side includes an arcuate undercut (46) for accommodating a turn in the conveyor system, the front end and rear end including curved vertical surfaces to prevent interference with preceding and succeeding carriers.

10. The carrier of claim 8, wherein one side of the carrier (12) includes a metallic block (18) capable of detection by a proximity sensor (16).

11. The carrier of claim 9 or claim 10, wherein at least one side toward the rear end includes a rear slot (28), the rear slot extending rearwards out the rear end and accommodating the initial braking mechanism (31), thereby enabling the initial braking system to be activated in anticipation of a succeeding carrier (12) before the carrier fully departs from the stop assembly (11).

12. A stop assembly (11) for stopping and receiving carrier units (12) of a moving conveyor assembly system, the stop assembly comprising means for engaging and lifting opposing sides of the carrier units, and the carrier units each having an upper surface (30) for supporting a workpiece, an under surface for frictionally engaging a moving conveyor (13), and means for engaging one side of the stop assembly, there also being means for engaging a second opposing side of the stop assembly, characterised by:
(a) an initial braking mechanism (31) and means for activating the initial braking system to initially stop a carrier (12) upon arrival at the stop assembly (11);
(b) a first sensor (16) for detecting the presence of the carrier (12) and means for communicating the presence of the carrier to a programmable controller; and
(c) a second sensor (17) for detecting a position of a reject pin (24) disposed on the carrier and means for communicating the position of the reject pin to a programmable controller,
the carrier unit (12) being vertically raised upon engagement of the opposing sides of the carrier to allow the conveyor (123) to move forwards underneath the carrier (12) without frictionally engaging an under surface of the carrier.

13. The stop assembly of claim 12, wherein the first sensor (16) detects the departure of the carrier (12) from the stop assembly (11), and the stop assembly further includes means for communicating the departure of the carrier to the programmable controller, the programmable controller instituting activation of the initial braking mechanism (31) to initially stop a succeeding carrier (12).

14. A method of operating an automatic conveyor-type assembly system wherein opposing sides of a carrier are engaged and lifted, the system comprising a carrier (12), a stop assembly (11), and means for engaging and lifting opposing sides of the carrier (12), the carrier having an upper surface (30) for supporting a workpiece, an under surface for frictionally engaging a moving conveyor (13), and means for engaging one side of the stop assembly, there also being means for engaging a second opposing side of the stop assembly, which method comprises transporting a carrier (12) resting on the conveyor (13) in a direction towards the stop assembly (11), and engaging a front portion of the carrier (12) with a braking mechanism (31) extending outwards from the stop assembly (11), characterised in that the method further comprises :
(a) sensing a presence of the carrier (12) at the stop assembly (11) with a first sensor (16) and communicating the presence of the carrier to a programmable controller,
(b) sensing a position of a reject pin (24) disposed on the carrier (12) with a second sensor (17) disposed on the stop assembly (11), the reject pin having two positions, one position indicating that the workpiece is defective, and another position indicating the workpiece is not defective,
(c) communicating the position of the reject pin (24) to the programmable controller,
(d) in the event that the position of the reject pin (24) indicates the workpiece is not defective, the programmable controller activating means engaging opposing sides of the carrier, the carrier unit being vertically raised upon engagement of the opposing sides of the carrier and allowing the conveyor (13) to move forwards underneath the carrier without frictionally engaging an under surface of the carrier,
(e) performing a prescribed task to the workpiece,
(f) deactivating the means for activating the means for engaging opposing sides of the carrier,
(g) deactivating the means for activating the initial braking mechanism (31), thereby releasing the initial braking mechanism and permitting the carrier (12) to move forwardly through the stop assembly (11),
(h) in the event that the position of the reject pin (24) indicates the workpiece is defective, the programmable controller deactivating the means for activating the initial braking mechanism (31), thereby releasing the initial braking system and permitting the carrier (12) to move forwardly through the stop assembly (11) without any task being performed on the defective workpiece, and
(i) activating the means for activating the initial braking mechanism (31), thereby readying the stop assembly (11) for a succeeding carrier.

15. The method of claim 14, wherein the carrier (12) includes a rear slot (28) which extends out a rear end of the carrier, the rear slot accommodating the initial braking mechanism (31), thereby enabling the initial braking system to be activated in anticipation of the succeeding carrier before the carrier fully departs from the stop assembly.

16. The method of claim 14 or claim 15 wherein, after the prescribed task is performed, the workpiece is tested by means for testing the workpiece, the means for testing the workpiece communicating a result signal to the programmable controller, which result signal may indicate that the workpiece is defective or may indicate that the workpiece is not defective, and, in the event that the result signal indicates the workpiece is defective, the programmable controller sending a signal to activate means for activating a reject piston (34) thereby extending the reject piston outwards to engage the reject pin (24) on the carrier and move the reject pin from the position indicating the workpiece is not defective to the position indicating the workpiece is defective.

17. The method of claim 16, wherein, in the event the result signal indicates that the workpiece is defective, the programmable controller sending a repair signal to means for repairing the defective workpiece, the means for repairing the defective workpiece completing a repair task on the defective workpiece, the workpiece being re-tested by the means for testing the workpiece, the means for testing the workpiece communicating a result signal to the programmable controller, which result signal may indicate that the workpiece is defective or may indicate that the workpiece is not defective, and, in the event that the result signal indicates the workpiece is no longer defective, the programmable controller sending a signal to activate the means for activating a reset piston, thereby extending the reset piston outwards to engage the reject pin on the carrier and move the reject pin from the position indicating the workpiece is defective to the position indicating the workpiece is not defective.

18. A combination carrier and precision stop assembly (10, 11) for use in a conveyor system, the combination comprising a carrier (12), a stop assembly (11), and means for engaging and lifting opposing sides of the carrier, the carrier having an upper surface (30) for supporting a workpiece and an under surface for frictionally engaging a moving conveyor (13), there being means for receiving a braking mechanism (31) to initially stop the carrier upon arrival at the stop assembly, wherein means are provided for engaging a first projection of the stop assembly (11) and means are provided for engaging a second projection of the stop assembly, the means for engaging the first and second projections of the stop assembly being disposed on opposing sides of the carrier so that engagement of the first projection forces positive engagement of the second projection, the carrier being vertically raised upon engagement of the first and second projections to allow the conveyor (13) to move forwards underneath the carrier (12) without frictionally engaging the under surface of the carrier, characterised in that
the stop assembly (11) includes the braking mechanism (31) and means for activating the braking system to initially stop the carrier upon arrival at the stop assembly, as well as the first projection, means for activating the first projection, and the second projection.

19. A carrier (12) for use in a conveyor system which includes means for engaging and lifting opposing sides of the carrier, the carrier (12) comprising an upper surface (30) for supporting a workpiece and an under surface for frictionally engaging a moving conveyor (13), and means for receiving an initial braking mechanism (31) to initially stop the carrier upon arrival at the stop assembly (11), characterised in that the carrier (12) includes means for engaging a first projection and means for engaging a second projection, there also being a reject pin (24) in the carrier (12), the reject pin having two positions, one position indicating that the workpiece is defective, and another position indicating the workpiece is not defective.

20. A stop assembly (11) for stopping and receiving carrier units (12) of a moving conveyor assembly system wherein means are provided for engaging and lifting opposing sides of the carrier units, and the carrier units each having an upper surface (30) for supporting a workpiece, an under surface for frictionally engaging a moving conveyor (13), and means for engaging one side of the stop assembly, there also being means for engaging a second opposing side of the stop assembly, characterised in that the stop assembly (11) comprises:
(a) an initial braking mechanism (31)and means for activating the initial braking system to initially stop a carrier upon arrival at the stop assembly,
(b) a first sensor (16) for detecting the presence of the carrier, and means for communicating the presence of the carrier to a programmable controller,
(c) a second sensor (17) for detecting a position of a reject pin (24) disposed on the carrier (12), and means for communicating the position of the reject pin to a programmable controller, and
(d) a first projection and means for activating the first projection, the first projection mateably engaging means for receiving the first projection disposed on a carrier, a second projection for engaging means for engaging the second projection disposed on the carrier, the second projection and first projection being disposed on opposing sides of the carrier so that engagement of the first projection in the means for engaging the first projection forces positive engagement of the second projection in the means for engaging the second projection,
the carrier unit (12) being vertically raised upon engagement of the first projection and second projection to allow the conveyor (13) to move forwards underneath the carrier without frictionally engaging an under surface of the carrier.

21. A method of operating an automatic conveyor-type assembly system wherein opposing sides of a carrier (12) are engaged and lifted, the system comprising a carrier (12), a stop assembly (11), and means for engaging and lifting opposing sides of the carrier (12), the carrier having an upper surface (30) for supporting a workpiece, an under surface for frictionally engaging a moving conveyor (13), and means for engaging one side of the stop assembly, there also being means for engaging a second opposing side of the stop assembly, which method comprises transporting a carrier (12) resting on the conveyor (13) in a direction towards the stop assembly (11), and engaging a front portion of the carrier (12) with a braking mechanism (31) extending outwards from the stop assembly (11), characterised in that the method further comprises :
(a) sensing the presence of the carrier at the stop assembly with a first sensor (16) and communicating the presence of the carrier to a programmable controller,
(b) sensing a position of a reject pin (24) disposed on the carrier with a second sensor (17) disposed on the stop assembly (11), the reject pin having two positions, one position indicating that the workpiece is defective, and another position indicating the workpiece is not defective,
(c) communicating the position of the reject pin (24) to the programmable controller, and, in the event the position of the reject pin indicates the workpiece is not defective, the programmable controller activating means for activating a first projection on a first side of the stop assembly, the first projection thereafter mateably engaging means for engaging the first projection disposed on a carrier unit, the engagement of the first projection in the hole forcibly engaging means for engaging a second projection disposed on the carrier with a second projection disposed on a second, opposing side of the stop assembly, the engagement of the first projection on one side of the carrier forcing positive engagement of the second projection on an opposing side of the carrier, the carrier unit being vertically raised upon engagement of the first projection and second projection in the hole and slot respectively and allowing the conveyor (13) to move forwards underneath the carrier (12) without frictionally engaging the under surface of the carrier,
(d) performing a prescribed task to the workpiece,
(e) deactivating the means for activating the first projection, thereby releasing the first projection from the means for engaging the first projection,
(f) deactivating the means for activating the initial braking mechanism (31), thereby releasing the initial braking mechanism and permitting the carrier to move forwardly through the stop assembly (11),
(g) in the event the position of the reject pin indicates the workpiece is defective, the programmable controller deactivating the means for activating the initial braking mechanism (31), thereby releasing the initial braking system and permitting the carrier to move forwardly through the stop assembly (11) without any task being performed on the defective workpiece, and
(h) activating the means for activating the initial braking mechanism (31), thereby readying the stop assembly (11) for a succeeding carrier.

22. A method of operating an automatic conveyor-type assembly system using a carrier (12), a stop assembly (11) and a programmable controller, wherein opposing sides of the carrier are engaged and lifted, and the carrier (12) comprises an upper surface (30) for supporting a workpiece and an under surface for frictionally engaging a moving conveyor (13), there being means for receiving a braking mechanism (31) to initially stop the carrier upon arrival at the stop assembly (11), means for engaging a first projection, and means for engaging a second projection, and a reject pin (24) disposed in the carrier, the reject pin having two positions, one position indicating that the workpiece is defective, and another position indicating the workpiece is not defective, and wherein the stop assembly (11) includes an initial braking mechanism (31) and means for activating the initial braking system to initially stop a carrier upon arrival at the stop assembly, a first sensor (16) for detecting the presence of the carrier, means for communicating the presence of the carrier to a programmable controller, a second sensor (17) for detecting the position of a reject pin (24) disposed on the carrier, means for communicating the position of the reject pin to a programmable controller, a first projection and means for activating the first projection, the first projection mateably engaging the means for engaging the first projection disposed on the carrier unit, a second projection for engaging the means for engaging the second projection disposed on the carrier, the second projection and first projection being disposed on opposing sides of the carrier so that engagement of the first projection forces positive engagement of the second projection, the carrier unit being vertically raised upon engagement of the first projection and second projection to allow the conveyor to move forwards underneath the carrier (12) without frictionally engaging an under surface of the carrier, which method comprises:
(a) transporting the carrier (12) on a forwardly-moving conveyor (13) until the means for receiving the initial braking system (31) engages the initial braking system;
(b) sensing the presence of the carrier with the first sensor (16) and communicating the presence of the carrier to the programmable controller;
(c) sensing the position of the reject pin (24) and communicating the position of the reject pin to the programmable controller;
(d) in the event the position of the reject pin indicates that the workpiece is defective, the programmable controller performing step i;
(e) in the event the position of the reject pin indicates the workpiece is not defective, the programmable controller performing step f;
(f) activating means for activating the first projection to engage the means for engaging the first projection which forces the second projection to engage the means for engaging the second projection;
(g) performing a prescribed task on the workpiece;
(h) deactivating means for activating the first projection to remove the first projection from the means for engaging the first projection and consequently removing the second projection from the means for engaging the second projection;
(i)) deactivating the means for activating the initial braking mechanism (31), thereby enabling the carrier and workpiece to depart the stop assembly; and
(j) activating the means for activating the initial braking mechanism (31) to extend the initial braking mechanism outwardly to thereby stop a succeeding carrier.

## Patentansprüche

1. Die Kombination eines Trägers und eines Präzisionsblockiersystems (10, 11) zur Verwendung in einem Fördersystem, wobei die Kombination einen Träger (12), ein Blockiersystem (11) und Einrichtungen zum Ergreifen und Anheben einander gegenüberliegender Seiten des Trägers (12) aufweist, wobei der Träger eine obere Fläche (30) zum Tragen eines Werkstücks, eine untere Fläche für den reibungsmäßigen Eingriff mit einem sich bewegenden Förderer (13) und mit Einrichtungen zum Greifen einer Seite des Blockiersystems, wobei ferner Einrichtungen zum Greifen einer zweiten gegenüberliegenden Seite des Blockiersystems vorgesehen sind, und wobei ferner der Träger (12) beim Greifen der einander gegenüberliegenden Seiten des Blockiersystems (11) vertikal angehoben wird, um es zu ermöglichen, daß der Förderer (13) sich unterhalb des Trägers vorwärts bewegt, ohne mit der Unterfläche des Trägers in reibungsmäßigen Eingriff zu gelangen, dadurch gekennzeichnet, daß das Blockiersystem (11) einen Anfangsbremsmechanismus (31) enthält, und daß Einrichtungen vorgesehen sind, um das Anfangsbremssystem zu aktivieren, um anfänglich den Träger bei Ankunft an dem Blockiersystem anzuhalten.

2. Kombination nach Anspruch 1, dadurch gekennzeichnet, daß der Träger ferner Einrichtungen zum Empfangen des Anfangsbremsmechanismus (31) aufweist, um anfänglich den Träger bei Ankunft an dem Blockiersystem anzuhalten.

3. Kombination nach Anspruch 1 oder 2, dadurch gekennzeichnet, daß das Blockiersystem (11) einen ersten Sensor (16) zum Erfassen der Anwesenheit des Trägers (12), nachdem der Träger anfänglich durch den Anfangsbremsmechanismus (31) angehalten wurde, aufweist, wobei das Blockiersystem ferner Einrichtungen enthält, um die Anwesenheit des Trägers (12) einem programmierbaren Kontroller nach Ankunft des Trägers (12) an dem Blockiersystem mitzuteilen.

4. Kombination nach einem der Ansprüche 1 bis 3, dadurch gekennzeichnet, daß der Träger (12) ferner einen Ausstoßstift (24) enthält, der in dem Träger (12) angeordnet ist und mindestens zwei Positionen aufweist, wobei eine Position anzeigt, daß das Werkstück defekt ist und eine andere Position anzeigt, daß das Werkstück nicht defekt ist.

5. Kombination nach Anspruch 4, dadurch gekennzeichnet, daß das Blockiersystem (11) einen zweiten Sensor (17) zum Erfassen der Position des Ausstoßstiftes (24) und Einrichtungen aufweist, um die Position des Ausstoßstiftes (24) einem programmierbaren Kontroller mitzuteilen, wobei der programmierbare Kontroller die Einrichtungen zum Ergreifen und Anheben einander gegenüberliegender Seiten des Trägers nur dann aktiviert, wenn der Ausstoßstift in der Position befindlich ist, die anzeigt, daß das Werkstück nicht defekt ist.

6. Kombination nach Anspruch 4 oder 5, dadurch gekennzeichnet, daß das Blockiersystem (11) einen Rücksetzkolben (34) und Einrichtungen zum Aktivieren des Rücksetzkolbens aufweist, und daß ein programmierbarer Kontroller die Einrichtungen zum Aktivieren des Rücksetzkolbens aktiviert, worauf der Rücksetzkolben danach den Ausstoßstift (24) ergreift und den Ausstoßstift aus der Position, die anzeigt, daß das Werkstück defekt ist, in die Position, die anzeigt, daß das Werkstück nicht defekt ist, bewegt.

7. Träger (12) zur Verwendung in einem Fördersystem, wobei Einrichtungen vorgesehen sind, um einander gegenüberliegende Seiten des Trägers zu ergreifen und anzuheben, wobei der Träger (12) eine obere Fläche (30) zum Tragen eines Werkstücks und eine untere Fläche für den reibungsmäßigen Eingriff mit einem sich bewegenden Förderer (13) aufweist, wobei ferner Einrichtungen zum Ergreifen einer Seite eines Blockiersystems (11) und Einrichtungen zum Ergreifen einer zweiten gegenüberliegenden Seite des Blockiersystems vorgesehen sind, dadurch gekennzeichnet, daß der Ausstoßstift (24) in dem Träger (12) angeordnet ist, daß der Ausstoßstift zwei Positionen aufweist, von denen eine Position anzeigt, daß das Werkstück defekt ist, und eine andere Position anzeigt, daß das Werkstück nicht defekt ist.

8. Träger nach Anspruch 7 mit Einrichtungen zur Aufnahme eines Anfangsbremsmechanismus (31), um anfänglich den Träger (12) bei Ankunft an der Blockieranordnung (11) anzuhalten.

9. Träger nach Anspruch 7 oder 8, dadurch gekennzeichnet, daß der Träger (12) ein Vorderende, ein Hinterende, einen Mittelabschnitt und zwei Seiten aufweist, und daß mindestens eine Seite eine bogenförmige Unterschneidung (46) zur Aufnahme einer Drehung in dem Fördersystem aufweist, wobei Vorder- und Hinterende gewölbte, senkrechte Flächen aufweisen, um eine Störung mit vorauslaufenden und nachfolgenden Trägern zu verhindern.

10. Träger nach Anspruch 8, dadurch gekennzeichnet, daß eine Seite des Trägers (12) einen metallischen Block (18) enthält, welcher durch einen Näherungssensor (16) erfaßbar ist.

11. Träger nach Anspruch 9 oder 10, dadurch gekennzeichnet, daß wenigstens eine Seite in Richtung des Hinterendes einen hinteren Schlitz (28) aufweist, wobei sich der hintere Schlitz nach hinten aus dem Hinterende erstreckt und den Anfangsbremsmechanismus (31) aufnimmt und dadurch die Aktivierung des Anfangsbremssystems in bezug auf einen folgenden Träger (12) vorausschauend ermöglicht, ehe der Träger vollständig das Blockiersystem (11) verläßt.

12. Blockiersystem nach Anspruch 11 zum Anhalten und Aufnehmen von Trägereinheiten (12) eines sich bewegenden Montagefördersystems, wobei das Blockiersystem Einrichtungen zum Ergreifen und Anheben einander gegenüberliegender Seiten der Trägereinheiten aufweist, und die Trägereinheiten je eine obere Fläche (30) zum Tragen eines Werkstücks und eine untere Fläche für die reibungsmäßigen Eingriff mit einem sich bewegenden Förderer aufweist, und wobei Einrichtungen vorgesehen sind, um eine Seite des Blockiersystems zu ergreifen, wobei ferner noch Einrichtungen zum Greifen einer gegenüberliegenden Seite des Blockiersystems vorgesehen sind, gekennzeichnet durch folgende Bestandteile:
(a) ein Anfangsbremsmechanismus (31) und Einrichtungen zum Aktivieren des Anfangsbremssystems, um einen Träger (12) bei Ankunft an dem Blockiersystem (11) anfänglich anzuhalten;
(b) einen ersten Sensor (16) zum Erfassen der Anwesenheit des Trägers (12) und Einrichtungen zum Weiterleiten der Anwesenheit des Trägers zu einem programmierbaren Kontroller; und
(c) ein zweiter Sensor (17) zum Erfassen einer Position eines Ausstoßstiftes (24), der auf dem Träger angeordnet ist, und Einrichtungen zum Mitteilen der Stellung des Ausstoßstiftes an einen programmierbaren Kontroller,
wobei die Trägereinheit (12) bei Eingriff mit den einander gegenüberliegenden Seiten des Trägers senkrecht angehoben wird, so daß sich der Förderer (123) unterhalb des Trägers (12) nach vorne bewegen kann, ohne in reibungsmäßigen Eingriff mit der Unterfläche des Trägers zu geraten.

13. Blockiersystem nach Anspruch 12, dadurch gekennzeichnet, daß der erste Sensor (16) das Verlassen des Blockiersystems (11) durch den Träger (12) erfaßt, und daß das Blockiersystem ferner Einrichtungen enthält, um das Verlassen des Trägers dem programmierbaren Kontroller mitzuteilen, wobei der programmierbare Kontroller die Aktivierung des Anfangsbremsmechanismus (31) einleitet, um anfänglich einen folgenden Träger (12) anzuhalten.

14. Verfahren zum Betreiben eines automatischen Montagesystems vom Förderertyp, bei welchem einander gegenüberliegende Seiten eines Trägers ergriffen und angehoben werden, wobei das System einen Träger (12), ein Blockiersystem (11) und Einrichtungen zum Ergreifen und Anheben einander gegenüberliegender Seiten des Trägers (12) aufweist, wobei der Träger eine obere Fläche (30) zum Tragen eines Werkstücks und eine untere Fläche für den reibungsmäßigen Eingriff mit einem sich bewegenden Förderer (13) aufweist, und wobei Einrichtungen vorgesehen sind, um eine Seite des Blockiersystems zu ergreifen, wobei ferner Einrichtungen vorgesehen sind, um eine zweite gegenüberliegende Seite des Blockiersystems zu greifen, wobei das Verfahren das Transportieren eines Trägers (12), der auf dem Förderer (13) ruht, in einer Richtung auf das Blockiersystem (11) zu und das Erfassen des vorderen Bereichs des Trägers (12) mit einem Bremsmechanismus (31) umfaßt, welcher sich von dem Blockiersystem (11) nach außen erstreckt, dadurch gekennzeichnet, daß das Verfahren ferner die folgenden Verfahrensschritte umfaßt:
(a) Erfassen der Anwesenheit des Trägers (12) an dem Blockiersystem (11) mit einem ersten Sensor (16) und Mitteilen der Anwesenheit des Trägers einem programmierbaren Kontroller,
(b) Erfassen der Position eines Ausstoßstiftes (24), der auf dem Träger (12) angeordnet ist, mit einem zweiten Sensor (17), der an dem Blockiersystem (11) angeordnet ist, wobei der Ausstoßstift zwei Positionen aufweist, von denen eine Position anzeigt, daß das Werkstück defekt ist, und eine andere Position anzeigt, daß das Werkstück nicht defekt ist,
(c) Mitteilen der Position des Ausstoßstiftes (24) dem programmierbaren Kontroller,
(d) im Falle, daß die Position des Ausstoßstiftes (24) anzeigt, daß das Werkstück nicht defekt ist, aktiviert der programmierbare Kontroller Einrichtungen zum Greifen der einander gegenüberliegenden Seiten des Trägers, wobei die Trägereinheit senkrecht bei Eingriff mit den einander gegenüberliegenden Seiten des Trägers angehoben wird, und zugelassen wird, daß sich der Förderer (13) unterhalb des Trägers nach vorne bewegt, ohne mit einer Unterfläche des Trägers in reibungsmäßigen Eingriff zu gelangen,
(e) Durchführen einer vorbestimmten Aufgabe an dem Werkstück,
(f) Deaktivieren der Einrichtungen zum Aktivieren der Einrichtungen zum Ergreifen einander gegenüberliegenden Seiten des Trägers,
(g) Deaktivieren der Einrichtungen zum Aktivieren des Anfangsbremsmechanismus (31), wodurch der Anfangsbremsmechanismus gelöst wird und zugelassen wird, daß sich der Träger (12) vorwärts durch das Blockiersystem (11) bewegt,
(h) falls die Position des Ausstoßstiftes (24) anzeigt, daß das Werkstück defekt ist, deaktiviert der programmierbare Kontroller die Einrichtungen zum Aktivieren des Anfangsbremsmechanismus (31) und löst hierdurch das Anfangsbremssystem und erlaubt, daß der Träger (12) sich nach vorne durch das Blockiersystem (11) bewegt, ohne daß irgendeine Aufgabe an dem defekten Werkstück durchgeführt wird, und
(i) Aktivieren der Einrichtungen zum Aktivieren des Anfangsbremsmechanismus (31), wodurch das Blockiersystem (11) für den folgenden Träger in Bereitschaft gesetzt wird.

15. Verfahren nach Anspruch 14, dadurch gekennzeichnet, daß der Träger (12) einen hinteren Schlitz (28) aufweist, welcher sich an einem Hinterende des Trägers nach außen erstreckt, wobei der hintere Schlitz den Anfangsbremsmechanismus (31) aufnimmt und hierdurch die Aktivierung des Anfangsbremssystems in Vorausschau auf den folgenden Träger ermöglicht, ehe der Träger vollständig das Blockiersystem verläßt.

16. Verfahren nach Anspruch 14 oder 15, dadurch gekennzeichnet,daß, nachdem die vorgeschriebene Aufgabe durchgeführt wurde, das Werkstück mittels Einrichtungen zum Untersuchen des Werkstücks untersucht wird, wobei die Einrichtungen zum Untersuchen des Werkstücks ein ein Resultat repräsentierendes Signal dem programmierbaren Kontroller mitteilen, wobei dieses Resultatsignal anzeigen kann, daß das Werkstück defekt ist oder anzeigen kann, daß das Werkstück nicht defekt ist, und im Falle, daß das Resultatsignal anzeigt, daß das Werkstück defekt ist, sendet der programmierbare Kontroller ein Signal zum Aktivieren der Einrichtungen zum Aktivieren eines Ausstoßkolbens (34), wodurch der Ausstoßkolben nach außen ausgefahren wird, um in Eingriff mit dem Ausstoßstift (24) auf dem Träger zu gelangen und den Ausstoßstift aus der Position, die anzeigt, daß das Werkstück nicht defekt ist, in die Position bewegt, die anzeigt, daß das Werkstück defekt ist.

17. Verfahren nach Anspruch 16, dadurch gekennzeichnet, daß, falls das Resultatsignal anzeigt, daß das Werkstück defekt ist, der programmierbare Kontroller ein Reparatursignal zu Einrichtungen zum Reparieren des defekten Werkstückes sendet, wobei die Einrichtungen zum Reparieren des defekten Werkstückes eine Reparaturaufgabe an dem defekten Werkstück durchführen, wonach das Werkstück neuerlich durch die Einrichtungen zum Untersuchen des Werkstückes untersucht wird, wobei die Einrichtungen zum Untersuchen des Werkstückes ein Resultatsignal an den programmierbaren Kontroller senden, wobei dieses Resultatsignal anzeigen kann, daß das Werkstück defekt ist oder anzeigen kann, daß das Werkstück nicht defekt ist, und daß, falls das Resultatsignal anzeigt, daß das Werkstück nicht mehr defekt ist, der programmierbare Kontroller ein Signal sendet, um die Einrichtungen zum Aktivieren eines Rückstellkolbens zu aktivieren, wodurch der Rückstellkolben ausgefahren wird, um in Eingriff mit dem Ausstoßstift auf dem Träger zu gelangen, und den Ausstoßstift aus der Position, die anzeigt, daß das Werkstück defekt ist, in die Position, die anzeigt, daß das Werkstück nicht defekt ist, bewegt.

18. Die Kombination aus einem Träger und einem Präzisionsblockiersystem (10, 11) zur Verwendung in einem Fördersystem, wobei die Kombination einen Träger (12), ein Blockiersystem (11) und Einrichtungen zum Greifen und Anheben einander gegenüberliegender Seiten des Trägers umfaßt, wobei der Träger eine obenliegende Fläche (3) zum Tragen des Werkstücks und eine untere Fläche für den reibungsmäßigen Eingriff mit einem sich bewegenden Förderer (13) aufweist, wobei Einrichtungen zur Aufnahme eines Bremsmechanismus (31) vorgesehen sind, um anfänglich den Träger bei Ankunft an dem Blockiersystem anzuhalten, wobei Einrichtungen vorgesehen sind, um einen ersten Vorsprung des Blockiersystems (11) zu ergreifen, und Einrichtungen vorgesehen sind, um einen zweiten Vorsprung des Blockiersystems zu greifen, wobei die Einrichtungen zum Greifen der ersten und zweiten Vorsprünge des Blockiersystems auf einander gegenüberliegenden Seiten des Trägers angeordnet sind, so daß der Eingriff des ersten Vorsprungs den positiven Eingriff des zweiten Vorsprungs erzwingt, wobei der Träger bei Eingriff des ersten und des zweiten Vorsprungs senkrecht angehoben wird, um es zu ermöglichen, daß sich der Förderer (13) unterhalb des Trägers (12) nach vorne bewegt, ohne in reibungsmäßigen Eingriff mit der Unterfläche des Trägers zu gelangen, dadurch gekennzeichnet, daß das Blockiersystem (11) den Bremsmechanismus (31) enthält, und daß Einrichtungen zum Aktivieren des Bremssystems vorgesehen sind, um anfänglich den Träger bei Ankunft an dem Blockiersystem anzuhalten, wie auch den ersten Vorsprung, ferner mit Einrichtungen zum Aktivieren des ersten Vorsprungs und des zweiten Vorsprungs.

19. Träger (12) zur Verwendung in einem Fördersystem, welches Einrichtungen zum Greifen und Anheben einander gegenüberliegender Seiten des Trägers enthält, wobei der Träger (12) eine obere Fläche (30) zum Tragen eines Werkstücks und eine Unterfläche für den reibungsmäßigen Eingriff mit einem sich bewegenden Förderer (13) aufweist, und Einrichtungen zur Aufnahme eines Anfangsbremsmechanismus (31) vorgesehen sind, um anfänglich den Träger bei Ankunft an dem Blockiersystem (11) anzuhalten, dadurch gekennzeichnet, daß der Träger (12) Einrichtungen zum Greifen eines ersten Vorsprungs und Einrichtungen zum Greifen eines zweiten Vorsprunges enthält, daß ferner ein Ausstoßstift (24) in dem Träger (12) vorgesehen ist, wobei der Ausstoßstift zwei Positionen aufweist, von denen eine Position anzeigt, daß das Werkstück defekt ist, und die andere Position anzeigt, daß das Werkstück nicht defekt ist.

20. Blockiersystem nach Anspruch 11 zum Anhalten und Aufnehmen von Trägereinheiten (12) eines sich bewegenden Montagefördersystems, wobei Einrichtungen vorgesehen sind, um einander gegenüberliegende Seiten der Trägereinheiten zu greifen und anzuheben und die Trägereinheiten je eine obere Fläche (30) zum Tragen eines Werkstücks und eine Unterfläche für den reibungsmäßigen Eingriff mit einem sich bewegenden Förderer (13) aufweisen, und Einrichtungen für den Eingriff mit einer Seite des Blockiersystems vorgesehen sind, wobei ferner Einrichtungen zum Greifen einer zweiten gegenüberliegenden Seite des Blockiersystems vorgesehen sind, dadurch gekennzeichnet, daß das Blockiersystem (11) folgende Bestandteile aufweist:
(a) einen Anfangsbremsmechanismus (31) und Einrichtungen zum Aktivieren des Anfangsbremssystems, um einen Träger bei Ankunft an dem Blockiersystem anfänglich anzuhalten,
(b) einen ersten Sensor (16) zum Erfassen der Anwesenheit des Trägers und Einrichtungen zum Mitteilen der Anwesenheit des Trägers an einen programmierbaren Kontroller,
(c) einen zweiten Sensor (17) zum Erfassen einer Position eines Ausstoßstiftes (24), der auf dem Träger (12) angeordnet ist, und Einrichtungen zum Mitteilen der Position des Ausstoßstiftes einem programmierbaren Kontroller, und
(d) einen ersten Vorsprung und Einrichtungen zum Aktivieren des ersten Vorsprungs, wobei der erste Vorsprung in ineinander passende Einrichtungen zur Aufnahme des ersten Vorsprungs eingreift, die an dem Träger angeordnet sind, einen zweiten Vorsprung für den Eingriff mit Einrichtungen zum Greifen des zweiten Vorsprungs, die auf dem Träger angeordnet sind, wobei der erste Vorsprung und der zweite Vorsprung auf einander gegenüberliegenden Seiten des Trägers angeordnet sind, so daß der Eingriff des ersten Vorsprungs in die Einrichtungen zum Greifen des ersten Vorsprungs einen positiven Eingriff des zweiten Vorsprungs in die Einrichtungen zum Greifen des zweiten Vorsprungs erzwingt,
wobei die Trägereinheit (12) bei Eingriff des ersten Vorsprungs und des zweiten Vorsprungs senkrecht angehoben wird, um zuzulassen, daß sich der Förderer (13) unterhalb des Trägers nach vorne bewegt, ohne mit der Unterfläche des Trägers in reibungsmäßigen Eingriff zu gelangen.

21. Verfahren zum Betreiben eines automatischen Montagesystems vom Förderertyp, bei dem einander gegenüberliegende Seiten eines Trägers (12) gegriffen und angehoben werden, das System einen Träger (12), ein Blockiersystem (11) und Einrichtungen zum Greifen und Anheben einander gegenüberliegender Seiten des Trägers (12) aufweist, wobei der Träger eine obere Fläche (30) zum Tragen eines Werkstücks und eine Unterfläche für den reibungsmäßigen Eingriff mit einem sich bewegenden Förderer (13) aufweist, und Einrichtungen zum Greifen einer Seite des Blockiersystems vorgesehen sind, wobei ferner Einrichtungen zum Greifen einer zweiten gegenüberliegenden Seite des Blockiersystems vorgesehen sind, wobei das Verfahren das Transportieren eines Trägers (12), der auf dem Förderer (13) ruht, in Richtung des Blockiersystems (11) und das Greifen eines Vorderabschnitts des Trägers (12) mit einem Bremsmechanismus (31) umfaßt, welcher sich nach außen von dem Blockiersystem (11) erstreckt, dadurch gekennzeichnet, daß das Verfahren die weiteren folgenden Verfahrensschritte umfaßt:
(a) Erfassen der Anwesenheit des Trägers an dem Blockiersystem mit einem ersten Sensor (16) und Mitteilen der Anwesenheit des Trägers einem programmierbaren Kontroller,
(b) Erfassen der Stellung eines Ausstoßstiftes (24), der auf dem Träger angeordnet ist, mit einem zweiten Sensor (17), der an dem Blockiersystem (11) angeordnet ist, wobei der Ausstoßstift zwei Positionen aufweist, von denen eine Position anzeigt, daß das Werkstück defekt ist, und eine andere Position anzeigt, daß das Werkstück nicht defekt ist,
(c) Mitteilen der Position des Ausstoßstiftes (24) dem programmierbaren Kontroller und im Falle, daß die Position des Ausstoßstiftes anzeigt, daß das Werkstück nicht defekt ist, aktiviert der programmierbare Kontroller Einrichtungen zum Aktivieren eines ersten Vorsprungs auf eine erste Seite des Blockiersystems, wobei der erste Vorsprung anschließend ineinander passend in Eingriff mit Einrichtungen zum Greifen des ersten Vorsprungs gelangt, die an einer Trägereinheit angeordnet sind, wobei der Eingriff des ersten Vorsprungs in das Loch den Eingriff mit Eingriffseinrichtungen für einen zweiten Vorsprung, die an dem Träger angeordnet sind, erzwingt, wobei ein zweiter Vorsprung an einer zweiten gegenüberliegenden Seite des Blockiersystems angeordnet ist, wobei der Eingriff des ersten Vorsprungs auf einer Seite des Trägers den positiven Eingriff des zweiten Vorsprungs auf einer gegenüberliegenden Seite des Trägers erzwingt, und die Trägereinheit senkrecht bei Eingriff des ersten Vorsprungs und des zweiten Vorsprungs in das Loch bzw. den Schlitz angehoben wird, und zuläßt, daß der Förderer (13) sich unterhalb des Trägers (12) nach vorne bewegt, ohne in reibungsmäßigen Eingriff mit der Unterfläche des Trägers zu geraten,
(d) Durchführen der bestimmten Aufgabe an dem Werkstück,
(e) Deaktivieren der Einrichtungen zum Aktivieren des ersten Vorsprungs, wodurch der erste Vorsprung aus den Einrichtungen zum Greifen des ersten Vorsprungs freigegeben wird,
(f) Deaktivieren der Einrichtungen zum Aktivieren des Anfangsbremsmechanismus (31), wodurch der Anfangsbremsmechanismus gelöst wird, und zugelassen wird, daß sich der Träger nach vorne durch das Blockiersystem (11) bewegt,
(g) falls die Position des Ausstoßstiftes anzeigt, daß das Werkstück defekt ist, deaktiviert der programmierbare Kontroller die Einrichtungen zum Aktivieren des Anfangsbremsmechanismus (31) und löst hierdurch das Anfangsbremssystem und läßt zu, daß sich der Träger nach vorne durch das Blockiersystem (11) bewegt, ohne daß irgendeine Aufgabe an dem defekten Werkstück durchgeführt wird, und aktiviert die Einrichtungen zum Aktivieren des Anfangsbremssystems (31), so daß das Blockiersystem (11) in Bereitschaft für einen folgenden Träger gesetzt wird.

22. Verfahren zum Betreiben eines automatischen Montagesystems vom Förderertyp unter Verwendung eines Trägers (12), einem Blockiersystem (11) und einem programmierbaren Kontroller, wobei einander gegenüberliegende Seiten des Trägers ergriffen und angehoben werden, und der Träger (12) eine obere Fläche (13) zum Tragen eines Werkstücks und eine Unterfläche für den reibungsmäßigen Eingriff mit einem sich bewegenden Förderer (13) aufweist, und Einrichtungen zur Aufnahme eines Bremsmechanismus (31) vorgesehen sind, um anfänglich den Träger bei Ankunft an dem Blockiersystem (11) anzuhalten, mit Einrichtungen zum Greifen eines ersten Vorsprungs und Einrichtungen zum Greifen eines zweiten Vorsprungs und mit einem Ausstoßstift (24), der in dem Träger angeordnet ist, wobei der Ausstoßstift zwei Positionen aufweist, von denen eine Position anzeigt, daß das Werkstück defekt ist, und eine andere Position anzeigt, daß das Werkstück nicht defekt ist, und wobei das Blockiersystem (11) einen Anfangsbremsmechanismus (31) und Einrichtungen zum Aktivieren des Anfangsbremssystems aufweist, um anfänglich einen Träger bei Ankuft an dem Blockiersystem (11) anzuhalten, mit einem ersten Sensor (16) zum Erfassen der Anwesenheit des Trägers und Einrichtungen zum Mitteilen der Anwesenheit des Trägers einem programmierbaren Kontroller, mit einem zweiten Sensor (17) zum Erfassen der Position eines Ausstoßstiftes (24), der auf dem Träger angeordnet ist, Einrichtungen zum Mitteilen der Position des Ausstoßstiftes einem programmierbaren Kontroller, mit einem ersten Vorsprung und Einrichtungen zum Aktivieren des ersten Vorsprungs, wobei der erste Vorsprung ineinander passend in Eingriff mit den Einrichtungen zum Greifen des ersten Vorsprungs eingreift, die auf der Trägereinheit angeordnet sind, mit einem zweiten Vorsprung zum Eingriff mit den Einrichtungen zum Greifen des zweiten Vorsprungs auf dem Träger, wobei der zweite Vorsprung und der erste Vorsprung auf einander gegenüberliegenden Seiten des Trägers angeordnet sind, so daß der Eingriff des ersten Vorsprungs einen positiven Eingriff des zweiten Vorsprungs erzwingt, und die Trägereinheit bei Eingriff des ersten Vorsprungs und des zweiten Vorsprungs senkrecht angehoben wird, um zuzulassen, daß sich der Förderer nach vorne unterhalb des Trägers (12) bewegt, ohne in reibungsmäßigen Eingriff mit der Unterfläche des Trägers zu geraten, wobei das Verfahren folgende Verfahrensschritte umfaßt:
(a) Transportieren des Trägers (12) auf einen sich nach vorne bewegenden Förderer (13), bis die Einrichtungen zur Aufnahme des Anfangsbremssystems (31) in Eingriff mit dem Anfangsbremssystem gelangen;
(b) Erfassen der Anwesenheit des Trägers mit dem ersten Sensor (16) und Mitteilen der Anwesenheit des Trägers dem programmierbaren Kontroller;
(c) Erfassen der Position des Ausstoßstiftes (24) und Mitteilen der Position des Ausstoßstiftes dem programmierbaren Kontroller;
(d) falls die Position des Ausstoßstiftes anzeigt, daß das Werkstück defekt ist, führt der programmierbare Kontroller Verfahrensschritt i durch;
(e) falls die Position des Ausstoßstiftes anzeigt, daß das Werkstück nicht defekt ist, führt der programmierbare Kontroller den Verfahrensschritt f durch;
(f) Aktivieren der Einrichtungen zum Aktivieren des ersten Vorsprungs für den Eingriff mit den Einrichtungen zum Greifen des ersten Vorsprungs, welches den zweiten Vorsprung dazu zwingt, in Eingriff mit den Einrichtungen zum Greifen des zweiten Vorsprungs zu gelangen;
(g) Durchführen einer vorgeschriebenen Aufgabe an dem Werkstück;
(h) Deaktivieren der Einrichtungen zum Aktivieren des ersten Vorsprungs zum Entfernen des ersten Vorsprungs aus den Einrichtungen zum Greifen des ersten Vorsprungs und anschließend Entfernen des zweiten Vorsprungs aus den Einrichtungen zum Greifen des zweiten Vorsprungs;
(i) Deaktivieren der Einrichtungen zum Aktivieren des Anfangsbremsmechanismus (31), so daß der Träger und das Werkstück das Blockiersystem verlassen können; und
(j) Aktivieren der Einrichtungen zum Aktivieren des Anfangsbremsmechanismus (31), um den Anfangsbremsmechanismus nach außen auszufahren, und um dadurch einen nachfolgenden Träger anzuhalten.

## Revendications

1. Combinaison d'un support et d'un ensemble d'arrêt de précision (10, 11) à utiliser dans un système transporteur, la combinaison comportant un support (12), un ensemble d'arrêt (11) et des moyens destinés à engager et soulever des côtés opposés du support (12), le support ayant une surface supérieure (30) destinée à supporter une pièce, une surface inférieure destinée à entrer en contact de frottement avec un transporteur (13) en mouvement, des moyens destinés à engager un côté de l'ensemble d'arrêt, des moyens étant également destinés à engager un second côté opposé de l'ensemble d'arrêt, grâce à quoi le support (12) est élevé verticalement lors de l'engagement des deux côtés opposés de l'ensemble d'arrêt (11) afin de permettre au transporteur (13) de se déplacer vers l'avant au-dessous du support sans entrer en contact de frottement avec la surface inférieure du support ; et caractérisée en ce que
l'ensemble d'arrêt (11) comprend un mécanisme de freinage initial (31) et des moyens destinés à activer le mécanisme de freinage initial pour arrêter initialement le support lorsqu'il arrive à l'ensemble d'arrêt.

2. Combinaison selon la revendication 1, dans laquelle le support (12) comprend aussi des moyens destinés à recevoir le mécanisme de freinage initial (31) pour arrêter initialement le support lorsqu'il arrive à l'ensemble d'arrêt.

3. Combinaison selon la revendication 1 ou la revendication 2, dans laquelle l'ensemble d'arrêt (11) comprend un premier capteur (16) destiné à détecter la présence du support (12) après que le support a été arrêté initialement par le mécanisme de freinage initial (31), l'ensemble d'arrêt comprenant aussi des moyens destinés à communiquer la présence du support (12) à un automate programmable lors de l'arrivée du support (12) à l'ensemble d'arrêt.

4. Combinaison selon l'une quelconque des revendications 1-3, dans laquelle le support (12) comprend aussi une broche (24) de rejet disposée dans le support (12) et ayant au moins deux positions, une position indiquant que la pièce est défectueuse et une autre position indiquant que la pièce n'est pas défectueuse.

5. Combinaison selon la revendication 4, dans laquelle l'ensemble d'arrêt (11) comprend un second capteur (17) destiné à détecter la position de la broche (24) de rejet ainsi que des moyens destinés à communiquer la position de la broche (24) de rejet à un automate programmable, l'automate programmable activant les moyens destinés à engager et soulever des côtés opposés du support uniquement lorsque la broche de rejet est dans la position indiquant que la pièce n'est pas défectueuse.

6. Combinaison selon la revendication 4 ou la revendication 5, dans laquelle l'ensemble d'arrêt (11) comprend un piston (34) de repositionnement et des moyens destinés à activer le piston de repositionnement, et dans laquelle un automate programmable active les moyens destinés à activer le piston de repositionnement, le piston de repositionnement engageant ensuite la broche de rejet (24) et déplaçant la broche de rejet de la position indiquant que la pièce est défectueuse à la position indiquant que la pièce n'est pas défectueuse.

7. Support (12) à utiliser dans un système transporteur dans lequel des moyens sont prévus pour engager et soulever des côtés opposés du support, le support (12) ayant une surface supérieure (30) destinée à supporter une pièce et une surface inférieure destinée à entrer en contact de frottement avec un transporteur (13) en mouvement, des moyens étant également destinés à engager un côté d'un ensemble d'arrêt (11) et des moyens étant destinés à engager un second côté, opposé, de l'ensemble d'arrêt, caractérisé en ce qu'une broche (24) de rejet est disposée dans le support (12), la broche de rejet ayant deux positions, une position indiquant que la pièce défectueuse et une autre position indiquant que la pièce n'est pas défectueuse.

8. Support selon la revendication 7, comprenant des moyens destinés à recevoir un mécanisme de freinage initial (31) pour arrêter initialement le support (12) lorsqu'il arrive à l'ensemble d'arrêt (11).

9. Support selon la revendication 7 ou la revendication 8, dans lequel le support (12) présente une extrémité avant, une extrémité arrière, une partie médiane et deux côtés, et dans lequel au moins un côté présente un dégagement arrondi (46) destiné à loger un coude dans le système transporteur, l'extrémité avant et l'extrémité arrière présentant des surfaces verticales arrondies pour éviter tout arc-boutement avec des supports précédent et suivant.

10. Support selon la revendication 8, dans lequel un côté du support (12) comprend un bloc métallique (18) pouvant être détecté par un capteur (16) de proximité.

11. Support selon la revendication 9 ou la revendication 10, dans lequel au moins un côté vers l'extrémité arrière présente une encoche arrière (28), l'encoche arrière s'étendant vers l'arrière et débouchant à l'extrémité arrière et logeant le mécanisme de freinage initial (31), permettant ainsi au système de freinage initial d'être activé en anticipation d'un support suivant (12) avant que le support se sépare complètement de l'ensemble d'arrêt (11).

12. Ensemble d'arrêt (11) destiné à arrêter et recevoir des unités à supports (12) d'un système à ensemble transporteur en mouvement, l'ensemble d'arrêt comportant des moyens destinés à engager et soulever des côtés opposés des unités à supports, et les unités à supports ayant chacune une surface supérieure (30) destinée à supporter une pièce, une surface inférieure destinée à entrer en contact de frottement avec un transporteur (13) en mouvement, et des moyens destinés à engager un côté de l'ensemble d'arrêt, des moyens étant également destinés à engager un second côté, opposé, de l'ensemble d'arrêt, caractérisé par :
(a) un mécanisme de freinage initial (31) et des moyens destinés à activer le système de freinage initial pour arrêter initialement un support (12) lorsqu'il arrive à l'ensemble d'arrêt (11) ;
(b) un premier capteur (16) destiné à détecter la présence du support (12) et des moyens destinés à communiquer la présence du support à un automate programmable ; et
(c) un second capteur (17) destiné à détecter une position d'une broche (24) de rejet disposée sur le support et des moyens destinés à communiquer la position de la broche de rejet à un automate programmable,
l'unité à support (12) étant élevée verticalement lors de l'engagement des côtés opposés du support pour permettre au transporteur (123) de se déplacer vers l'avant au-dessous du support (12) sans contact de frottement avec une surface inférieure du support.

13. Ensemble d'arrêt selon la revendication 12, dans lequel le premier capteur (16) détecte l'éloignement du support (12) depuis l'ensemble d'arrêt (11), et l'ensemble d'arrêt comprend en outre des moyens destinés à communiquer l'éloignement du support à l'automate programmable, l'automate programmable établissant l'activation du mécanisme de freinage initial (31) pour arrêter initialement un support suivant (12).

14. Procédé de mise en oeuvre d'un système à ensemble du type transporteur automatique dans lequel des côtés opposés d'un support sont engagés et soulevés, le système comportant un support (12), un ensemble d'arrêt (11) et des moyens destinés à engager et soulever des côtés opposés du support (12), le support ayant une surface supérieure (30) destinée à supporter une pièce, une surface inférieure destinée à entrer en contact de frottement avec un transporteur (13) en mouvement, et des moyens destinés à engager un côté de l'ensemble d'arrêt, des moyens étant également destinés à engager un second côté, opposé, de l'ensemble d'arrêt, lequel procédé comprend le transport d'un support (12) reposant sur le transporteur (13) en direction de l'ensemble d'arrêt (11), et l'engagement d'une partie avant du support (12) avec un mécanisme de freinage (31) faisant saillie vers l'extérieur de l'ensemble d'arrêt (11), caractérisé en ce que le procédé comprend en outre les étapes dans lesquelles :
(a) on détecte la présence du support (12) à l'ensemble d'arrêt (11) à l'aide d'un premier capteur (16) et on communique la présence du support à un automate programmable,
(b) on détecte une position d'une broche de rejet (24) disposée sur le support (12) à l'aide d'un second capteur (17) disposé sur l'ensemble d'arrêt (11), la broche de rejet ayant deux positions, une position indiquant que la pièce est défectueuse et une autre position indiquant que la pièce n'est pas défectueuse,
(c) on communique la position de la broche (24) de rejet à l'automate programmable,
(d) dans le cas où la position de la broche de rejet (24) indique que la pièce n'est pas défectueuse, l'automate programmable active des moyens engageant des côtés opposés du support, l'unité à support étant élevée verticalement lors de l'engagement des côtés opposés du support et permettant au transporteur (13) de se déplacer vers l'avant au-dessous du support sans contact de frottement avec une surface inférieure du support,
(e) on exécute un travail prescrit sur la pièce,
(f) on désactive les moyens pour activer les moyens destinés à engager des côtés opposés du support,
(g) on désactive les moyens pour activer le mécanisme de freinage initial (31), relâchant ainsi le mécanisme de freinage initial et permettant au support (12) de se déplacer vers l'avant à travers l'ensemble d'arrêt (11),
(h) dans le cas où la position de la broche de rejet (24) indique que la pièce est défectueuse, l'automate programmable désactive les moyens pour activer le mécanisme de freinage initial (31), relâchant ainsi le système de freinage initial et permettant au support (12) de se déplacer vers l'avant à travers l'ensemble d'arrêt (11) sans qu'un travail quelconque ne soit effectué sur la pièce défectueuse, et
(i) on active les moyens pour activer le mécanisme de freinage initial (31), amenant ainsi l'ensemble d'arrêt (11) à être prêt pour un support suivant.

15. Procédé selon la revendication 14, dans lequel le support (12) présente une encoche arrière (28) qui s'étend jusqu'à l'extérieur à une extrémité arrière du support, l'encoche arrière logeant le mécanisme de freinage initial (31), permettant ainsi au système de freinage initial d'être activé en anticipation du support suivant avant que le support s'écarte complètement de l'ensemble d'arrêt.

16. Procédé selon la revendication 14 ou la revendication 15, dans lequel, après que le travail prescrit a été effectué, la pièce est essayée par des moyens destinés à essayer la pièce, les moyens d'essai de la pièce communiquant un signal de résultat à l'automate programmable, lequel signal de résultat peut indiquer que la pièce est défectueuse ou peut indiquer que la pièce n'est pas défectueuse et, dans le cas où le signal de résultat indique que la pièce est défectueuse, l'automate programmable envoyant un signal pour activer des moyens destinés à activer un piston (34) de rejet afin de faire avancer le piston de rejet vers l'extérieur pour engager la broche de rejet (24) située sur le support et déplacer la broche de rejet de la position indiquant que la pièce n'est pas défectueuse à la position indiquant que la pièce est défectueuse.

17. Procédé selon la revendication 16, dans lequel, dans le cas où le signal de résultat indique que la pièce est défectueuse, l'automate programmable envoie un signal de réparation à des moyens destinés à réparer la pièce défectueuse, les moyens de réparation de la pièce défectueuse mènent à bien un travail de réparation sur la pièce défectueuse, la pièce défectueuse est de nouveau essayée par les moyens d'essai de la pièce, les moyens d'essai de la pièce communiquent un signal de résultat à l'automate programmable, lequel signal de résultat peut indiquer que la pièce est défectueuse ou peut indiquer que la pièce n'est pas défectueuse et, dans le cas où le signal de résultat indique que la pièce n'est plus défectueuse, l'automate programmable envoie un signal pour activer les moyens destinés à activer un piston de rétablissement, faisant ainsi avancer le piston de rétablissement vers l'extérieur pour qu'il engage la broche de rejet située sur le support et déplace la broche de rejet de la position indiquant que la pièce est défectueuse à la position indiquant que la pièce n'est pas défectueuse.

18. Combinaison d'un support et d'un ensemble d'arrêt de précision (10, 11) à utiliser dans un système transporteur, la combinaison comportant un support (12), un ensemble d'arrêt (11) et des moyens destinés à engager et soulever des côtés opposés du support, le support ayant une surface supérieure (30) destinée à supporter une pièce et une surface inférieure destinée à entrer en contact de frottement avec un transporteur (13) en mouvement, des moyens étant prévus pour recevoir un mécanisme de freinage (31) destiné à arrêter initialement le support à son arrivée à l'ensemble d'arrêt,
dans laquelle des moyens sont prévus pour engager une première saillie de l'ensemble d'arrêt (11) et des moyens sont prévus pour engager une seconde saillie de l'ensemble d'arrêt, les moyens pour engager les première et seconde saillies de l'ensemble d'arrêt étant disposés sur des côtés opposés du support afin que l'engagement de la première saillie oblige à un engagement positif de la seconde saillie, le support étant élevé verticalement lors de l'engagement des première et seconde saillies pour permettre au transporteur (13) de se déplacer vers l'avant au-dessous du support (12) sans contact de frottement avec la surface inférieure du support, caractérisée en ce que l'ensemble d'arrêt (11) comprend le mécanisme de freinage (31) et des moyens destinés à activer le système de freinage pour arrêter initialement le support à son arrivée à l'ensemble d'arrêt, ainsi que la première saillie, des moyens destinés à activer la première saillie, et la seconde saillie.

19. Support (12) à utiliser dans un système transporteur qui comprend des moyens destinés à engager et soulever des côtés opposés du support, le support (12) présentant une surface supérieure (30) destinée à supporter une pièce et une surface inférieure destinées à entrer en contact de frottement avec un transporteur (13) en mouvement, et des moyens destinés à recevoir un mécanisme de freinage initial (31) pour arrêter initialement le support lorsqu'il arrive à l'ensemble d'arrêt (11),
caractérisé en ce que le support (12) comprend des moyens destinés à engager une première saillie et des moyens destinés à engager une seconde saillie, une broche de rejet (24) se trouvant également dans le support (12), la broche de rejet ayant deux positions, une position indiquant que la pièce est défectueuse et une autre position indiquant que la pièce n'est pas défectueuse.

20. Ensemble d'arrêt (11) destiné à arrêter et recevoir des unités à supports (12) d'un système d'ensemble à transporteur en mouvement, dans lequel des moyens sont prévus pour engager et soulever des côtés opposés des unités à supports, et les unités à supports présentent chacune une surface supérieure (30) destinée à supporter une pièce, une surface inférieure destinée à établir un contact de frottement avec un transporteur (13) en mouvement, et des moyens destinés à engager un côté de l'ensemble d'arrêt, des moyens étant également prévus pour engager un second côté, opposé, de l'ensemble d'arrêt, caractérisé en ce que l'ensemble d'arrêt (11) comporte :
(a) un mécanisme de freinage initial (31) et des moyens destinés à activer le système de freinage initial pour arrêter initialement un support lorsqu'il arrive à l'ensemble d'arrêt,
(b) un premier capteur (16) destiné à détecter la présence du support, et des moyens destinés à communiquer la présence du support à un automate programmable,
(c) un second capteur (17) destiné à détecter une position d'une broche de rejet (24) disposée sur le support (12), et des moyens destinés à communiquer la position de la broche de rejet à un automate programmable, et
(d) une première saillie et des moyens destinés à activer la première saillie, la première saillie engageant de façon complémentaire des moyens destinés à recevoir la première saillie et disposés sur un support, une seconde saillie destinée à engager des moyens pour l'engagement de la seconde saillie, disposés sur le support, la seconde saillie et la première saillie étant disposées sur des côtés opposés du support afin que l'engagement de la première saillie dans les moyens destinés à engager la première saillie oblige un engagement positif de la seconde saillie dans les moyens destinés à engager la seconde saillie,
l'unité à support (12) étant élevée verticalement lors de l'engagement de la première saillie et de la seconde saillie pour permettre au transporteur (13) de se déplacer vers l'avant au-dessous du support sans contact de frottement avec une surface intérieure du support.

21. Procédé de mise en oeuvre d'un système à ensemble du type transporteur automatique dans lequel des côtés opposés d'un support (12) sont engagés et soulevés, le système comportant un support (12), un ensemble d'arrêt (11) et des moyens destinés à engager et soulever des côtés opposés du support (12), le support présentant une surface supérieure (30) destinée à supporter une pièce, une surface inférieure destinée à entrer en contact de frottement avec un transporteur (13) en mouvement, et des moyens destinés à engager un côté de l'ensemble d'arrêt, des moyens étant également prévus pour engager un second côté, opposé, de l'ensemble d'arrêt, lequel procédé comprend le transport d'un support (12) reposant sur le transporteur (13) en direction de l'ensemble d'arrêt (11), et l'engagement d'une partie avant du support (12) avec un mécanisme de freinage (31) faisant saillie vers l'extérieur de l'ensemble d'arrêt (11), caractérisé en ce que le procédé comprend en outre les étapes dans lesquelles :
(a) on détecte la présence du support à l'ensemble d'arrêt à l'aide d'un premier capteur (16) et on communique la présence du support à un automate programmable,
(b) on détecte une position d'une broche de rejet (24) disposée sur le support à l'aide d'un second capteur (17) disposé sur l'ensemble d'arrêt (11), la broche de rejet ayant deux positions, une position indiquant que la pièce est défectueuse et une autre position indiquant que la pièce n'est pas défectueuse,
(c) on communique la position de la broche de rejet (24) à l'automate programmable, et, dans le cas où la position de la broche de rejet indique que la pièce n'est pas défectueuse, l'automate programmable active des moyens destinés à activer une première saillie sur un premier côté de l'ensemble d'arrêt, la première saillie engageant ensuite de façon complémentaire des moyens destinés à engager la première saillie et disposés sur une unité à support, l'engagement de la première saillie dans le trou provoquant l'engagement à force de moyens destinés à engager une seconde saillie disposée sur le support avec une seconde saillie disposée sur un second côté, opposé, de l'ensemble d'arrêt, l'engagement de la première saillie sur un premier côté du support obligeant à un engagement positif de la seconde saillie sur un côté opposé du support, l'unité à support étant élevée verticalement lors de l'engagement de la première saillie et de la seconde saillie dans le trou et dans l'encoche, respectivement, et permettant au transporteur (13) de se déplacer vers l'avant et au-dessous du support (12) sans contact de frottement avec la surface inférieure du support,
(d) on exécute un travail prescrit sur la pièce,
(e) on désactive les moyens destinés à activer la première saillie, libérant ainsi la première saillie des moyens destinés à engager la première saillie,
(f) on désactive les moyens destinés à activer le mécanisme de freinage initial (31), relâchant ainsi le mécanisme de freinage initial et permettant au support de se déplacer vers l'avant à travers l'ensemble d'arrêt (11),
(g) dans le cas où la position de la broche de rejet indique que la pièce est défectueuse, l'automate programmable désactivant les moyens destinés à activer le mécanisme de freinage initial (31), relâchant ainsi le système de freinage initial et permettant au support de se déplacer vers l'avant à travers l'ensemble d'arrêt (11) sans qu'un travail quelconque ne soit effectué sur la pièce défectueuse, et
(h) on active les moyens destinés à activer le mécanisme de freinage initial (31), amenant ainsi l'ensemble d'arrêt (11) à être prêt pour un support suivant.

22. Procédé de mise en oeuvre d'un système à ensemble du type transporteur automatique utilisant un support (12), un ensemble d'arrêt (11) et un automate programmable, dans lequel des côtés opposés du support sont engagés et soulevés, et le support (12) présente une surface supérieure (30) destinée à supporter une pièce et une surface inférieure destinée à entrer en contact de frottement avec un transporteur (13) en mouvement, des moyens étant destinés à recevoir un mécanisme de freinage (31) pour arrêter initialement le support à son arrivée à l'ensemble d'arrêt (11), des moyens destinés à engager une première saillie et des moyens destinés à engager une seconde saillie, et une broche de rejet (24) disposée dans le support, la broche de rejet ayant deux positions une position indiquant que la pièce est défectueuse et une autre position indiquant que la pièce n'est pas défectueuse, et dans lequel l'ensemble d'arrêt (11) comprend un mécanisme de freinage initial (31) et des moyens destinés à activer le mécanisme de freinage initial pour arrêter initialement le support lorsqu'il arrive à l'ensemble d'arrêt, un premier capteur (16) destiné à détecter la présence du support, des moyens destinés à communiquer la présence du support à un automate programmable, un second capteur (17) destiné à détecter la position d'une broche de rejet (24) disposée sur le support, des moyens destinés à communiquer la position de la broche de rejet à un automate programmable, une première saillie et des moyens destinés à activer la première saillie, la première saillie engageant de façon complémentaire les moyens destinés à engager la première saillie et disposés sur l'unité de support, une seconde saillie pour engager les moyens destinés à engager la seconde saillie et disposés sur le support, la seconde saillie et la première saillie étant disposées sur des côtés opposés du support afin que l'engagement de la première saillie oblige à un engagement positif de la seconde saillie, l'unité à support étant élevée verticalement lors de l'engagement de la première saillie et de la seconde saillie pour permettre au transporteur de se déplacer vers l'avant au-dessous du support (12) sans contact de frottement avec une surface inférieure du support, lequel procédé comprend les étapes dans lesquelles :
(a) on transporte le support (12) sur un transporteur (13) se déplaçant vers l'avant jusqu'à ce que les moyens destinés à recevoir le système de freinage initial (31) engagent le système de freinage initial ;
(b) on détecte la présence du support à l'aide du premier capteur (16) et on communique la présence du support à l'automate programmable ;
(c) on détecte la position de la broche (24) de rejet et on communique la position de la broche de rejet à l'automate programmable ;
(d) dans le cas où la position de la broche de rejet indique que la pièce est défectueuse, l'automate programmable exécute l'étape i ;
(e) dans le cas où la position de la broche de rejet indique que la pièce n'est pas défectueuse, l'automate programmable exécute l'étape f ;
(f) on active des moyens destinés à activer la première saillie pour engager les moyens destinés à engager la première saillie, ce qui oblige la seconde saillie à engager les moyens destinés à engager la seconde saillie ;
(g) on exécute un travail prescrit sur la pièce ;
(h) on désactive des moyens destinés à activer la première saillie pour enlever la première saillie des moyens destinés à engager la première saillie et enlever, par conséquent, la seconde saillie des moyens destinés à engager la seconde saillie ;
(i) on désactive les moyens destinés à activer le mécanisme de freinage initial (31), permettant ainsi au support et à la pièce de quitter l'ensemble d'arrêt ; et
(j) on active les moyens destinés à activer le mécanisme de freinage initial (31) pour faire avancer le mécanisme de freinage initial vers l'extérieur et arrêter ainsi un support suivant.
